# EUROPEAN PATENT APPLICATION

(11) **EP 4 550 770 A1**
(43) Date of publication of application: **07.05.2025**
(21) Application number: 23830969.4
(22) Date of filing: 02.06.2023
(51) Int. Cl.: H04N 5/073, G01C 3/06, H04N 23/54, H04N 23/60

(54) **INFORMATION PROCESSING DEVICE AND INFORMATION PROCESSING METHOD**

(30) Priority: 28.06.2022 JP 2022103389
(71) Applicant: Sony Semiconductor Solutions Corporation, Atsugi-shi, Kanagawa 243-0014 (JP)
(72) Inventor: MIYATANI, Yoshitaka, Atsugi-shi, Kanagawa 243-0014 (JP); MIYABE, Toshihiro, Atsugi-shi, Kanagawa 243-0014 (JP); NAKAGAWA, Kei, Tokyo 108-0075 (JP)
(74) Representative: MFG Patentanwälte Meyer-Wildhagen Meggle-Freund Gerhard PartG mbB
(86) International application number: PCT/JP2023/020588
(87) International publication number: WO 2024/004519

(57) **Abstract**

An information processing device includes a first reception unit that receives first data generated by a first sensor in synchronization with a first reference signal and second data generated by a second sensor, and a transmission unit that transmits the first data and at least part of the second data as third data synchronized with a second reference signal.

## Description

### Field

The present disclosure relates to an information processing device and an information processing method.

### Background

In a solid-state imaging device including a complementary metal oxide semiconductor (CMOS) or the like, an asynchronous or synchronous solid-state imaging element that detects a change in luminance for each pixel in real time as an event has been proposed. As described above, the solid-state imaging element that detects an event for each pixel is also referred to as an event-based vision sensor (EVS).

### Citation List

### Patent Literature

Patent Literature 1: JP 2021-508975 A

### Summary

### Technical Problem

However, in a hybrid sensor in which a plurality of sensors is combined, such as an image sensor and an EVS, or a time of flight (ToF) sensor and an EVS, not all data acquired by each sensor is necessarily required in a processing circuit in a subsequent stage, and there is a case where useless data transfer occurs and transfer efficiency is reduced.

Therefore, the present disclosure proposes an information processing device and an information processing method capable of suppressing a reduction in transfer efficiency.

### Solution to Problem

In order to solve the above problem, an information processing device device according to one embodiment of the present disclosure includes: a first reception unit that receives first data generated by a first sensor in synchronization with a first reference signal and second data generated by a second sensor; and a transmission unit that transmits the first data and at least part of the second data as third data synchronized with a second reference signal.

### Brief Description of Drawings

FIG. 1 is a functional block diagram illustrating a schematic configuration example of an imaging device according to an embodiment of the present disclosure.
FIG. 2 is a timing chart for describing a schematic operation example of the imaging device according to a first operation example of an embodiment of the present disclosure.
FIG. 3 is a timing chart for describing a schematic operation example of an imaging device according to a second operation example of an embodiment of the present disclosure.
FIG. 4 is a diagram illustrating an example of a data structure of third output data according to an embodiment of the present disclosure.
FIG. 5 is a diagram illustrating a configuration example of first and second signal processing devices according to the first example of an embodiment of the present disclosure.
FIG. 6 is a diagram illustrating a configuration example of first and second signal processing devices according to the second example of an embodiment of the present disclosure.
FIG. 7 is a functional block diagram illustrating a schematic configuration example of an imaging device according to the first example of an embodiment of the present disclosure.
FIG. 8 is a timing chart illustrating a schematic operation example of an imaging device according to the first example of an embodiment of the present disclosure.
FIG. 9 is a functional block diagram illustrating a schematic configuration example of an imaging device according to the second example of an embodiment of the present disclosure.
FIG. 10 is a timing chart illustrating a schematic operation example of an imaging device according to the second example of an embodiment of the present disclosure.
FIG. 11 is a functional block diagram illustrating a schematic configuration example of an imaging device according to the third example of an embodiment of the present disclosure.
FIG. 12 is a timing chart illustrating a schematic operation example of an imaging device according to the third example of an embodiment of the present disclosure.
FIG. 13 is a functional block diagram illustrating a schematic configuration example of an imaging device according to the fourth example of an embodiment of the present disclosure.
FIG. 14 is a timing chart illustrating a schematic operation example of an imaging device according to the fourth example of an embodiment of the present disclosure.
FIG. 15 is a diagram for describing a deblur correction and frame interpolation according to an embodiment of the present disclosure.
FIG. 16 is a diagram for describing frame interpolation according to an embodiment of the present disclosure.
FIG. 17 is a diagram for describing frame interpolation of depth information according to an embodiment of the present disclosure.
FIG. 18 is a diagram for describing an effect acquired by frame interpolation of depth information according to an embodiment of the present disclosure (part 1).
FIG. 19 is a diagram for describing an effect acquired by frame interpolation of depth information according to an embodiment of the present disclosure (part 2).
FIG. 20 is a diagram for describing an effect acquired by frame interpolation of depth information according to an embodiment of the present disclosure (part 3).
FIG. 21 is a block diagram illustrating a configuration example of an imaging device according to a first configuration example of an embodiment of the present disclosure.
FIG. 22 is a block diagram illustrating a configuration example of an imaging device according to a second configuration example of an embodiment of the present disclosure.
FIG. 23 is a block diagram illustrating a configuration example of an imaging device according to a third configuration example of an embodiment of the present disclosure.
FIG. 24 is a schematic diagram illustrating a schematic configuration example of an imaging device according to an embodiment of the present disclosure.
FIG. 25 is a block diagram illustrating a system configuration example of an imaging device according to an embodiment of the present disclosure.
FIG. 26 is a block diagram illustrating a schematic configuration example of a hybrid sensor according to an embodiment of the present disclosure.
FIG. 27 is a block diagram illustrating another schematic configuration example of the hybrid sensor according to an embodiment of the present disclosure.
FIG. 28 is a schematic diagram illustrating a pixel array example of the hybrid sensor according to an embodiment of the present disclosure.
FIG. 29 is a schematic diagram illustrating an example of another pixel array of the hybrid sensor according to an embodiment of the present disclosure.
FIG. 30 is a diagram illustrating an exemplary stacked structure of a solid-state imaging device according to an embodiment of the present disclosure.
FIG. 31 is a block diagram depicting an example of schematic configuration of a vehicle control system.
FIG. 32 is a diagram of assistance in explaining an example of installation positions of an outside-vehicle information detection section and an imaging unit.

### Description of Embodiments

Hereinafter, the embodiments of the present disclosure will be described in detail with reference to the drawings. In the following embodiments, the same parts are designated by the same reference signs, so that duplicate description will be omitted.

Further, the present disclosure will be described in the order of the following items.
1. An embodiment
1.1 Schematic configuration example
1.2 Schematic operation example
1.2.1 First operation example (asynchronous type)
1.2.2 Second operation example (synchronous type)
1.3 Structure example of third output data
1.4 Configuration example of signal processing device
1.4.1 First example
1.4.2 Second example
1.5 Specific example of imaging device
1.5.1 First example
1.5.2 Second example
1.5.3 Third example
1.5.4 Fourth example
1.6 Deblur correction and frame interpolation
1.7 Frame interpolation of depth information
1.8 Configuration example of imaging device
1.8.1 First configuration example
1.8.2 Second configuration example
1.8.3 Third configuration example
1.9 Specific configuration example
1.10 Configuration example of hybrid sensor
1.10.1 Another configuration example of hybrid sensor
1.10.2 Pixel array example of hybrid sensor
1.10.3 Another pixel array example of hybrid sensor
1.11 Stacked structure example of solid-state imaging device
2. Application example to mobile object

### 1. An embodiment

First, an embodiment of the present disclosure will be described in detail with reference to the drawings.

### 1.1 Schematic configuration example

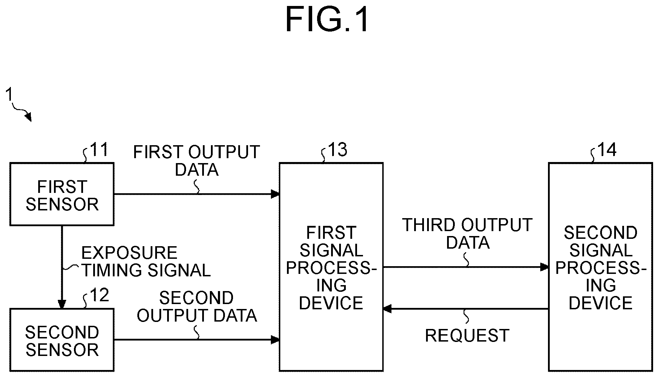

FIG. 1 is a functional block diagram illustrating a schematic configuration example of an imaging device according to the present embodiment. As illustrated in FIG. 1, an imaging device 1 includes a plurality of sensors including a first sensor 11 and a second sensor 12, a first signal processing device 13, and a second signal processing device 14.

In the present embodiment, the first sensor 11 may be, for example, various sensors such as an image sensor that acquires a color image (including a multispectral image including wavelength components other than those of the three primary colors of RGB) and/or a monochrome image (including a special light image such as infrared light), a distance measuring sensor that acquires a distance (also referred to as a depth) to a subject in an angle of view, and an inertial measurement device that detects acceleration, angular acceleration, and the like. Note that, in the following description, a complementary metal oxide semiconductor (CMOS) image sensor (CIS) is exemplified as the image sensor, and a ToF sensor of a direct ToF method or an indirect ToF method is exemplified as the distance measuring sensor.

In addition, in the present embodiment, a case where the second sensor 12 is EVS will be exemplified. The EVS may be a synchronous type in which two or more pixels detect an event in synchronization, or may be an asynchronous type in which pixels detect an event independently.

The first signal processing device 13 includes, for example, a processing device such as a field programmable gate array (FPGA), a micro controller unit (MCU), or a micro processor unit (MPU), a digital signal processor (DSP), an application specific integrated circuit (ASIC), or an application specific standard product (ASSP), and selectively outputs, as third output data, data necessary for processing in the second signal processing device 14 in the subsequent stage, from among the first output data output from the first sensor 11 and the second output data output from the second sensor 12.

The second signal processing device 14 includes, for example, an application processor and the like, and executes various types of processing (hereinafter, also referred to as predetermined processing) such as a deblur correction, frame interpolation, recognition processing, and simultaneous localization and mapping (SLAM) based on the third output data input from the first signal processing device 13. The second signal processing device 14 may designate data making a request of the first signal processing device 13 by transmitting a request to the first signal processing device 13.

### 1.2 Schematic operation example

Next, a schematic operation of the imaging device according to the present embodiment will be described. Hereinafter, a case where the second sensor 12 is an asynchronous sensor (first operation example) and a case where the second sensor 12 is a synchronous sensor (second operation example) will be exemplified.

### 1.2.1 First operation example (asynchronous type)

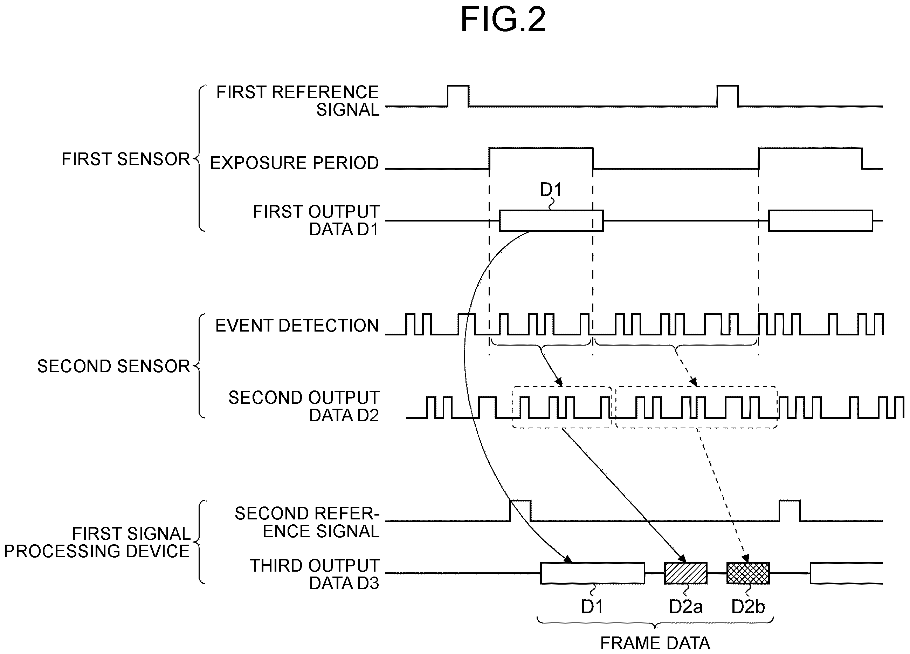

FIG. 2 is a timing chart for describing a schematic operation example of the imaging device according to the first operation example of the present embodiment. Note that FIG. 2 illustrates a case where the first sensor 11 is an image sensor and the second sensor 12 is an asynchronous EVS.

As illustrated in FIG. 2, the first sensor 11 performs exposure of pixels and reading of pixel signals from the exposed pixels during a frame period defined by the first reference signal by being synchronized with a first reference signal rising (or falling) in a predetermined first frame period to output pixel signals for one frame read from all the pixels as first output data D1. In addition, the first sensor 11 generates an exposure timing signal indicating that the pixel is in the exposure period, and inputs the exposure timing signal to the second sensor 12.

On the other hand, at the timing when the event is detected in each pixel, the second sensor 12 generates event data including position information (address or the like) of the pixel in which the event has been detected, a polarity (positive event or negative event) of the detected event, information (time-stamp or the like) indicating the time when the event has been detected, and information (hereinafter, referred to as an exposure period flag) indicating whether the timing when the event has been detected is during the exposure period of the first sensor 11 to output the generated event data as second output data (event stream) D2 as needed. Note that the exposure period flag may be generated based on an exposure timing signal input from the first sensor 11. In addition, the second output data D2 may be output after being synchronized (framed) by a reference signal having a period and/or a phase different from those of the first reference signal.

The first signal processing device 13 generates frame data using the first output data D1 input from the first sensor 11 and the second output data D2 input from the second sensor 12 in synchronization with a second reference signal that rises (or falls) in a predetermined second frame period to output the generated frame data as third output data D3.

At this time, the first signal processing device 13 may determine whether the event indicated by each piece of event data in the second output data D2 is an event detected during the exposure period based on the exposure period flag, and may handle event data of an event detected during the exposure period (also referred to as second a output data D2a) and event data of an event detected outside the exposure period (also referred to as second b output data D2b) separately.

Furthermore, in a case where any one of the second a output data D2a and the second b output data D2b is requested in the request, the first signal processing device 13 may generate the third output data D3 by including the requested data in the frame data.

However, in a case where both the second a output data D2a and the second b output data D2b are requested in the request, in a case where no data is designated in the request, or the like, the first signal processing device 13 may generate frame data including both the second a output data D2a and the second b output data D2b.

Note that the first frame period and the second frame period may be the same period or different periods. Further, when the first frame period and the second frame period are the same period, the first reference signal and the second reference signal may have the same phase (that is, rise (or fall) at the same timing), or may have different phases (that is, the phases are shifted).

### 1.2.2 Second operation example (synchronous type)

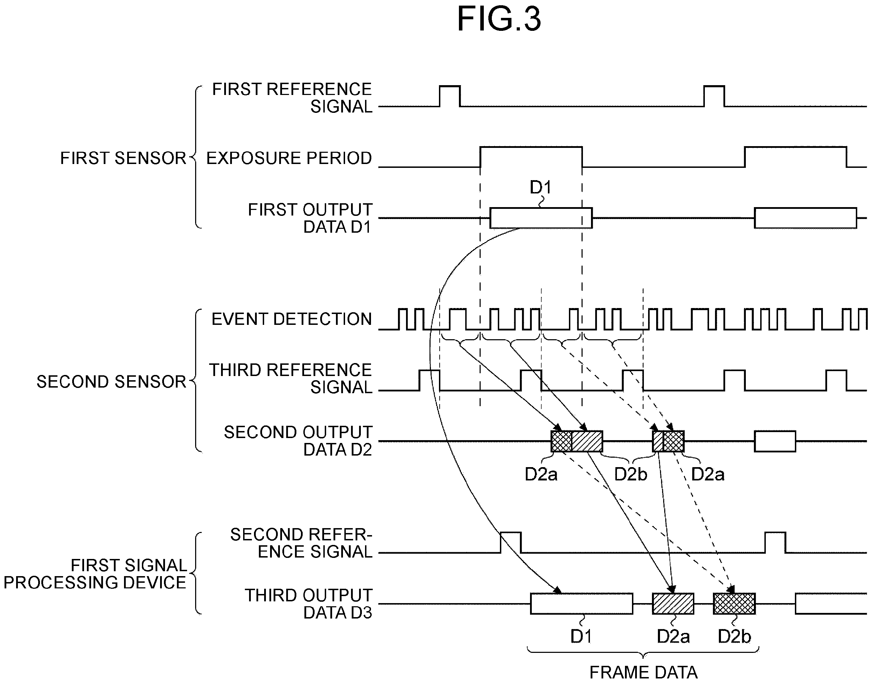

FIG. 3 is a timing chart for describing a schematic operation example of the imaging device according to the second operation example of the present embodiment. Note that FIG. 3 illustrates a case where the first sensor 11 is an image sensor and the second sensor 12 is a synchronous EVS.

In FIG. 3, the first sensor 11 outputs first output data D1 for one frame in synchronization with the first reference signal, as in the first operation example illustrated in FIG. 2.

On the other hand, as in the first operation example illustrated in FIG. 2, the second sensor 12 generates event data at a timing when an event is detected in each pixel. However, in the second operation example, the event data for each frame is accumulated based on a third reference signal rising (or falling) in a predetermined third frame period, and a set of the accumulated event data is output as output data D2 for one frame.

Note that the first frame period and the third frame period may be the same period or different periods. Further, when the first frame period and the third frame period are the same period, the first reference signal and the third reference signal may have the same phase (that is, rise (or fall) at the same timing), or may have different phases (that is, the phases are shifted).

As in the first operation example illustrated in FIG. 2, the first signal processing device 13 generates and outputs third output data D3 using the first output data D1 and the second output data D2 that can be input from the second sensor 12 by synchronizing with the second reference signal. At this time, the second a output data D2a and the second b output data D2b may be separately handled based on the exposure period flag.

The other operations may be similar to those of the first operation example, and thus the description thereof will be omitted here.

### 1.3 Structure example of third output data

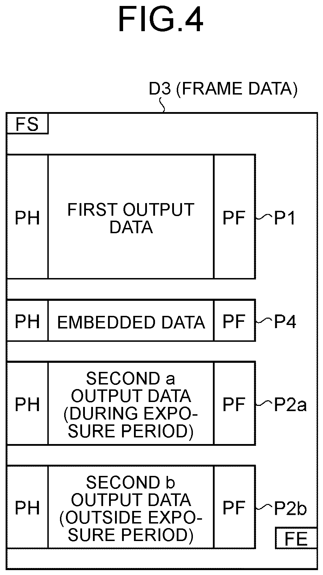

Next, an example of a data structure of the third output data D3 output from the first signal processing device 13 will be described. FIG. 4 is a diagram illustrating an example of a data structure of third output data according to the present embodiment.

As illustrated in FIG. 4, the third output data D3 has, for example, a structure in which a packet P1 including the first output data D1 and a packet P2 including the second output data D2 are disposed in a payload portion between a header portion FS indicating the head of the frame data and a trailer portion FE indicating the end of the frame data. When the second a output data D2a and the second b output data D2b are distinguished, the packet P2 may be divided into a packet P2a of the second a output data D2a and a packet P2b of the second b output data D2b. In addition, a packet P4 including embedded data may be disposed between the header portion FS and the trailer portion FE.

Each of the packets P1, P2(P2a, P2b), and P4 includes a packet header PH indicating the head of the packet and a packet footer PF indicating the end of the packet, and has a structure in which each piece of data is disposed between the packet header PH and the packet footer PF.

The data length of each of the packets P1, P2(P2a, P2b), and P4 may be a fixed length or a variable length. In the case of the fixed length, data may be divided into a plurality of packets if the data is not accommodated in one packet. In addition, in a case where the data is shorter than the data length of one packet, the shortage may be padded with a fixed value.

In addition, when the second a output data D2a and the second b output data D2b are distinguished from each other, the information for identifying the storage position of each of the second a output data D2a and/or the second b output data D2b may be stored in any one of the packet header PH or the packet footer PF of the packet P2a and/or P2b, the header portion FS or the trailer portion FE or the payload portion of the frame data, and the embedded data.

### 1.4 Configuration example of signal processing device

Next, configurations of the first signal processing device 13 and the second signal processing device 14 will be described with some examples.

### 1.4.1 First example

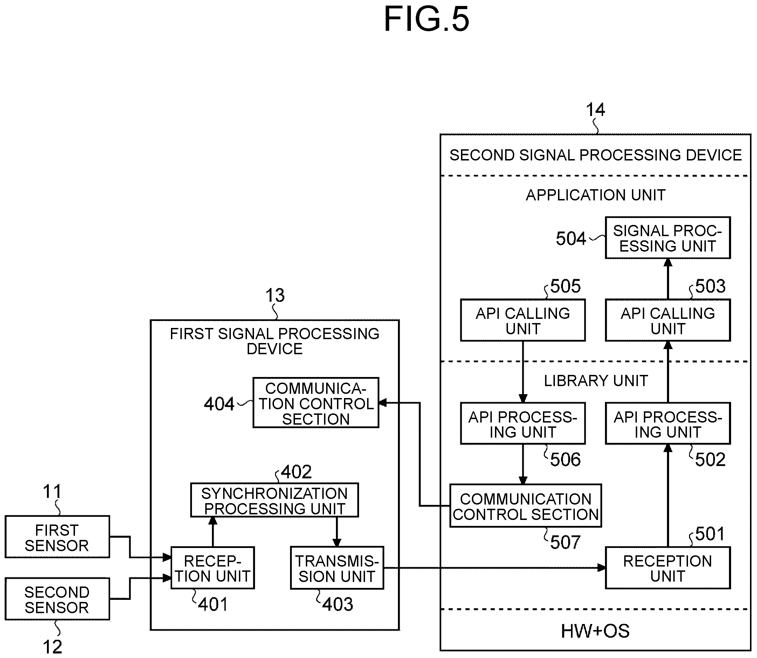

The first example illustrates a case where generation of third output data is executed in the first signal processing unit 13, and the predetermined processing is executed on the third output data by the second signal processing device 14. FIG. 5 is a diagram illustrating a configuration example of the first and second signal processing devices according to the first example.

As illustrated in FIG. 5, in the first example, the first signal processing device 13 includes a reception unit 401, a synchronization processing unit 402, a transmission unit 403, and a communication control section 404. On the other hand, the second signal processing device 14 includes a reception unit 501, an application programming interface (API) processing unit 502, an API calling unit 503, a signal processing unit 504, an API calling unit 505, an API processing unit 506, and a communication control section 507.

In the first signal processing device 13, the reception unit 401 receives first output data output from the first sensor 11 in synchronization with the first reference signal, and receives second output data output from the second sensor 12 asynchronously or synchronously.

The synchronization processing unit 402 generates third output data using the first output data and the second output data received by the reception unit 401. Then, the transmission unit 403 transmits the third output data generated by the synchronization processing unit 402 to the second signal processing device 14.

In the second signal processing device 14, the reception unit 501 receives the third output data transmitted from the first signal processing device 13.

When the reception unit 501 receives the third output data, the API calling unit 503 calls the API for acquiring the third output data. An API processing unit 502 supplies the third output data received by the reception unit 501 to the API calling unit 503 in response to the API call. On the other hand, the signal processing unit 504 executes the predetermined processing using the third output data acquired by the API calling unit 503. Note that the API calling unit 503 may call an API for selectively acquiring only the second a output data D2a generated during the exposure period of the first sensor 11 among the third output data. In this case, the API processing unit 502 may selectively supply the second a output data D2a among the third output data received by the reception unit 501 to the API calling unit 503 in response to the API call. Alternatively, the API calling unit 503 may call an API for selectively acquiring only the second b output data D2b generated outside the exposure period of the first sensor 11 among the third output data. In this case, the API processing unit 502 may selectively supply the second b output data D2b among the third output data received by the reception unit 501 to the API calling unit 503 in response to the API call.

Furthermore, in the second signal processing device 14, the API that transmits the request to the first signal processing device 13 accesses the API processing unit 506 via the API calling unit 505. The accessed API processing unit 506 transmits a request identified by the API to the communication control section 404 of the first signal processing device 13 via the communication control section 507. At this time, the API calling unit 505 may call an API for transmitting a request for requesting the first signal processing device 13 to supply only the second a output data D2a generated within the exposure period of the first sensor 11 as the third output data. On the other hand, the API processing unit 506 may cause the communication control section 507 to transmit a request for transmitting only the second a output data D2a as the third output data to the communication control section 404 in response to the API call. In this case, the first signal processing device 13 may transmit the second a output data D2a generated during the exposure period of the first sensor 11 to the second signal processing device 14 as the third output data. Alternatively, the API calling unit 505 may call an API for transmitting a request for requesting the first signal processing device 13 to supply only the second b output data D2b generated outside the exposure period of the first sensor 11 as the third output data. On the other hand, the API processing unit 506 may cause the communication control section 507 to transmit a request for transmitting only the second b output data D2b as the third output data to the communication control section 404 in response to the API call. In this case, the first signal processing device 13 may transmit the second b output data D2b generated outside the exposure period of the first sensor 11 to the second signal processing device 14 as the third output data.

### 1.4.2 Second example

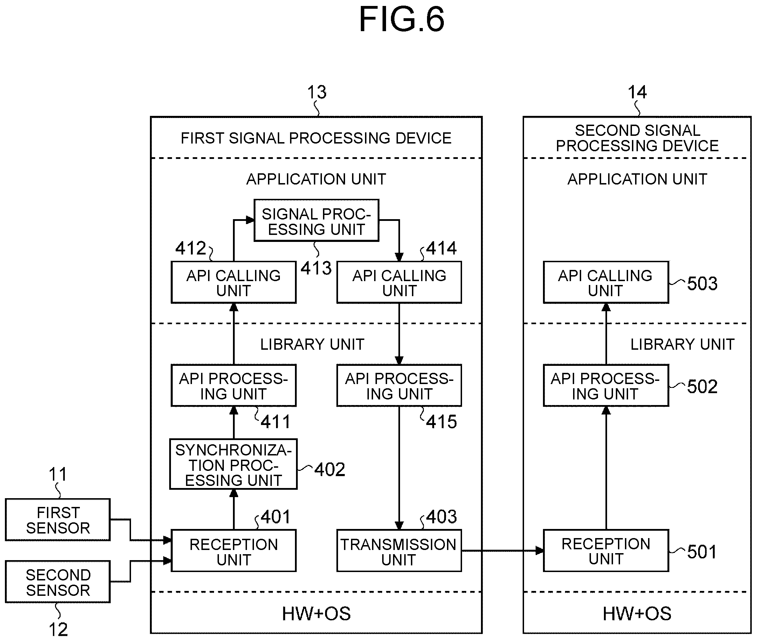

The second example illustrates a case where at least part of the predetermined processing for the third output data is executed in addition to the generation of the third output data in the first signal processing unit 13, and the rest of the predetermined processing for the third output data is executed by the second signal processing device 14. FIG. 6 is a diagram illustrating a configuration example of first and second signal processing devices according to the second example.

As illustrated in FIG. 6, in the second example, the first signal processing device 13 includes an API processing unit 411, an API calling unit 412, a signal processing unit 413, an API calling unit 414, and an API processing unit 415 in addition to the reception unit 401, the synchronization processing unit 402, and the transmission unit 403. Meanwhile, the second signal processing device 14 includes the reception unit 501, the API processing unit 502, and the API calling unit 503.

In the first signal processing device 13, the synchronization processing unit 402 generates third output data from the first output data and the second output data received by the reception unit 401. When the synchronization processing unit 402 generates the third output data, the API calling unit 412 calls the API for acquiring the third output data to acquire the third output data via the API processing unit 411. On the other hand, the signal processing unit 413 executes at least part of the predetermined processing using the third output data acquired by the API calling unit 412. Note that the API calling unit 412 may call an API for selectively acquiring only the second a output data D2a or the second b output data D2b in the third output data. In this case, the API processing unit 411 may selectively supply the second a output data D2a or the second b output data D2b among the third output data generated by the synchronization processing unit 402 to the API calling unit 412 in response to the API call.

On the other hand, the API calling unit 414 calls an API for transmitting a result of the predetermined processing by the signal processing unit 413, thereby causing the API processing unit 415 to transmit the processing result to the second signal processing device 14 via the transmission unit 403. Note that the API calling unit 414 may call an API for transmitting the third output data together with the processing result.

The processing result transmitted from the transmission unit 403 is received by the reception unit 501 of the second signal processing device 14. When the reception unit 501 receives the third output data, the API calling unit 503 calls the API for acquiring the third output data. An API processing unit 502 supplies the third output data received by the reception unit 501 to the API calling unit 503 in response to the API call. Then, the API calling unit 503 executes the rest of the predetermined processing by calling and executing the API.

Note that, in the following description, for the sake of clarity, a case where the first signal processing device 13 and the second signal processing device 14 as the first example have the configuration according to the first example will be exemplified.

### 1.5 Specific example of imaging device

Next, a more specific configuration of the imaging device 1 according to the present embodiment will be described with some examples.

### 1.5.1 First example

In the first example, an imaging device 1A configured to perform a so-called deblur correction in which an image sensor is used as the first sensor 11, an EVS is used as the second sensor 12, and a blur occurring in image data (first output data) acquired by the image sensor 11 is corrected using event data (second output data) from the EVS 12 will be described. Note that, in the following, a case where the EVS 12 is an asynchronous type (see FIG. 2) will be exemplified, but the present invention is not limited thereto, and may be a synchronous type (see FIG. 3).

As one of factors causing a blur in image data acquired by an image sensor, it is conceivable that a subject within an angle of view moves during an exposure period. This is particularly problematic in a case where the exposure period is lengthened, such as imaging in a dark place. On the other hand, in general, the substantial frame rate of the EVS is much higher than that of the image sensor. For example, while a general frame rate of an image sensor is 60 to 120 frames per second (fps), the EVS can realize a frame rate of 1000 fps or more. Therefore, the image data reconstructed based on the event data acquired by the EVS is hardly affected by the movement of the subject. Therefore, in the first example, a blur occurring in the image data acquired by the image sensor 11 is corrected based on the event data acquired by the EVS 12 (deblur correction).

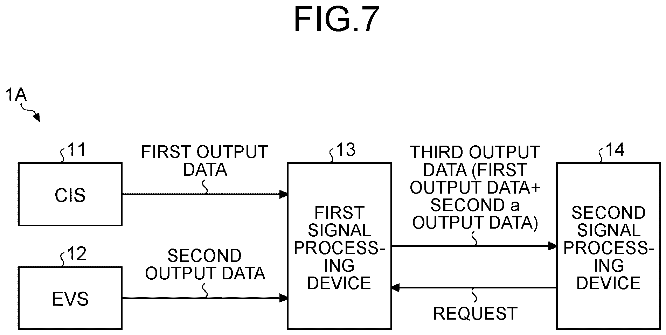

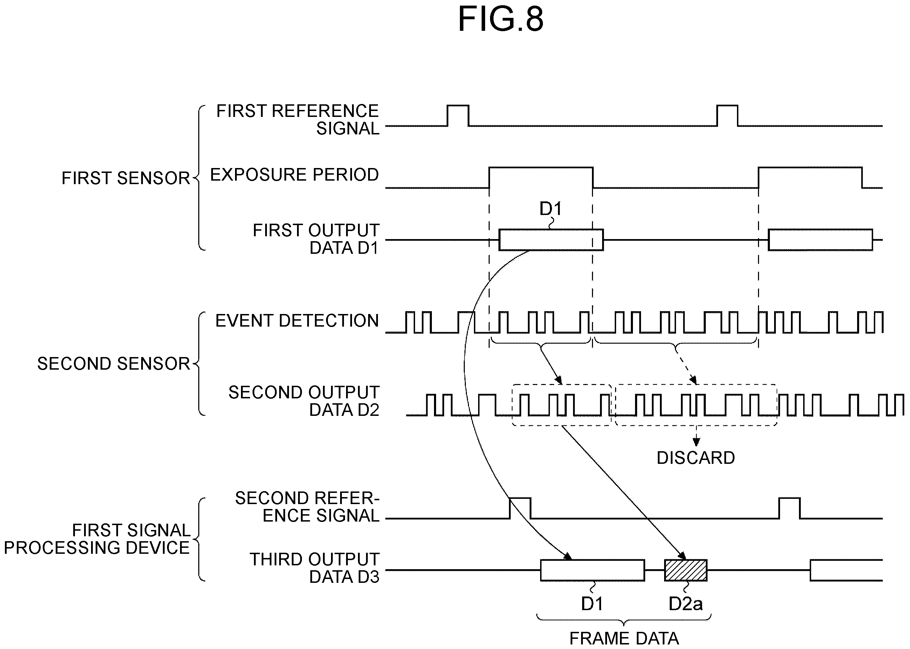

FIG. 7 is a functional block diagram illustrating a schematic configuration example of the imaging device according to the first example. FIG. 8 is a timing chart illustrating a schematic operation example of the imaging device according to the first example.

As illustrated in FIGS. 7 and 8, in the first example, the first signal processing device 13 discards the event data (second b output data D2b) acquired outside the exposure period from among the event stream (second output data D2) input from the EVS 12, and generates the frame data (third output data D3) to be output to the second signal processing device 14 using the image data (first output data D1) input from the image sensor 11 and the event data (second a output data D2a) acquired by the EVS 12 within the exposure period.

As described above, the event data (the second b output data D2b) that is not used for the processing (deblur correction) in the second signal processing device 14 is discarded by the first signal processing device 13, so that the amount of data transmitted from the first signal processing device 13 to the second signal processing device 14 can be reduced. As a result, it is possible to suppress the transmission band, and thus, it is possible to realize faster and more efficient data transfer.

The second signal processing device 14 corrects a blur that occurs in the image data (first output data D1) in the frame data (third output data D3) using the event data (second a output data D2a) acquired within the exposure period (deblur correction). Consequently, the second signal processing device 14 can acquire high-quality image data with reduced blurring.

Note that, in the present example, since the movement of the subject outside the exposure period does not cause a blur in the image data, the event data (the second b output data D2b) acquired outside the exposure time is discarded, but the present invention is not limited thereto. For example, the event data (the second b output data D2b) acquired outside the exposure time may also be included in the frame data (the third output data D3), and the second signal processing device 14 may be configured to perform frame interpolation between the image data (the first output data D1) arrayed along the time series using the event data (the second b output data D2b) acquired outside the exposure time.

Furthermore, in the present example, the case where the event data (the second b output data D2b) unnecessary for the deblur correction is discarded by the first signal processing device 13 has been exemplified, but the present invention is not limited thereto, and the event data generated outside the exposure time in the EVS 12 may be discarded. Alternatively, the EVS 12 may be configured not to generate event data outside the exposure time.

### 1.5.2 Second example

In the second example, an imaging device 1B configured to acquire distance information (depth information) to a subject by the EVS 12 in addition to acquisition of image data (first output data) by the image sensor 11 using an image sensor as the first sensor 11 and using an EVS as the second sensor 12 will be described. Note that, in the following, a case where the EVS 12 is an asynchronous type (see FIG. 2) will be exemplified, but the present invention is not limited thereto, and may be a synchronous type (see FIG. 3).

In the present example, the depth information is acquired using a so-called structured light method in which light of a predetermined pattern is projected toward the subject, and distortion, a size, and the like generated in the shape of the light of the predetermined pattern projected onto the subject are identified to measure the distance to the subject. Although it is also possible to use an image sensor that detects the shape of the light projected onto the subject, it is possible to measure the distance at a higher speed using EVS with a higher frame rate.

However, light projected by the structured light method interferes with image data acquired by the image sensor. Therefore, in the present example, as will be described later, light is projected outside the exposure period of the image sensor, and the shape of the light projected onto the subject is detected by the EVS.

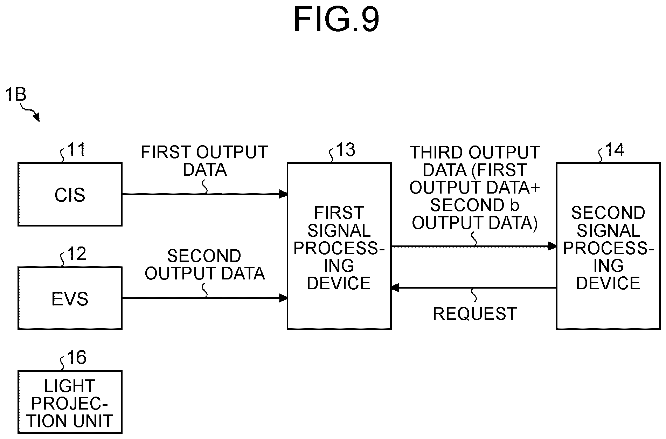

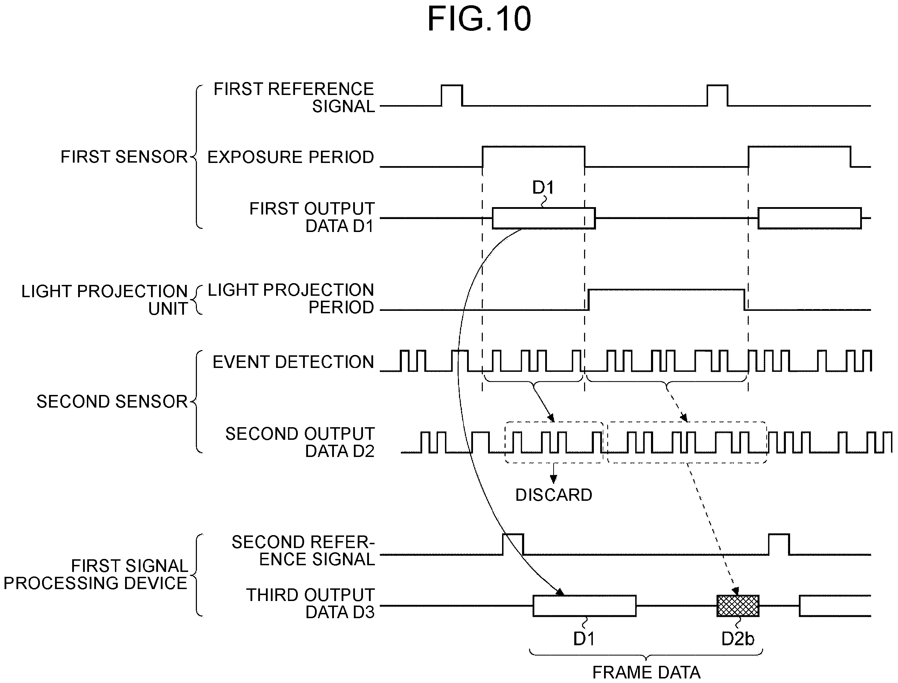

FIG. 9 is a functional block diagram illustrating a schematic configuration example of an imaging device according to the second example. FIG. 10 is a timing chart illustrating a schematic operation example of the imaging device according to the second example.

As illustrated in FIG. 9, the imaging device 1B according to the second example further includes a light projection unit 16 that projects a predetermined pattern of light toward the subject, in addition to the configuration same as that of the imaging device 1A according to the first example.

As illustrated in FIG. 10, the light projection period in which the light projection unit 16 projects light is set outside the exposure period of the image sensor 11. As a result, it is possible to avoid the image data (first output data D1) acquired by the image sensor 11 from being affected by the light transmitted from the light projection unit 16.

The first signal processing device 13 discards the event data (second a output data D2a) acquired during the exposure period from among the event stream (second output data D2) input from the EVS 12, and generates frame data (third output data D3) to be output to the second signal processing device 14 using the image data (first output data D1) input from the image sensor 11 and the event data (second b output data D2b) acquired by the EVS 12 outside the exposure period.

As described above, the event data (the second a output data D2a) that is not used for the processing (distance measuring processing) in the second signal processing device 14 is discarded by the first signal processing device 13, so that the amount of data transmitted from the first signal processing device 13 to the second signal processing device 14 can be reduced as in the first example.

The second signal processing device 14 reconstructs the image data (first output data D1) using the event data (second b output data D2b) in the frame data (third output data D3), and identifies the distortion, size, and the like of the shape of the projection light captured in the image data, thereby generating the depth information indicating the distance to the subject. Other configurations and operations may be similar to those of the first example.

Note that, in the present example, the event data (the second a output data D2a) acquired within the exposure time in which the light projected onto the subject is not detected is discarded, but the present invention is not limited thereto. For example, the event data (the second a output data D2a) acquired within the exposure time may also be included in the frame data (the third output data D3), and the second signal processing device 14 may be configured to perform the deblur correction on the image data (the first output data) acquired by the image sensor 11 using the event data (the second a output data D2a) acquired within the exposure time.

Furthermore, in the present example, the case where the event data (the second a output data D2a) unnecessary for the distance measurement processing is discarded by the first signal processing device 13 has been exemplified, but the present invention is not limited thereto, and the event data generated within the exposure time in the EVS 12 may be discarded. Alternatively, the EVS 12 may be configured not to generate event data within the exposure time.

### 1.5.3 Third example

In the third example, as in the first example, the deblur correction of the image data (first output data) is performed using the event data (second a output data D2a) acquired within the exposure time, and as in the second example, light of a predetermined pattern is projected to the subject outside the exposure time, and the depth information is acquired using the event data (second b output data) acquired at that time.

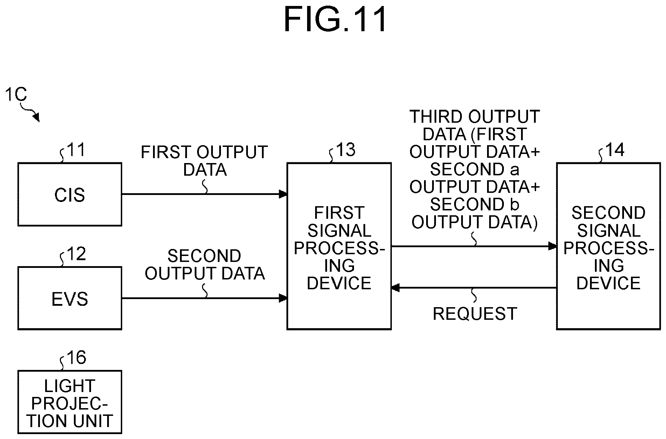

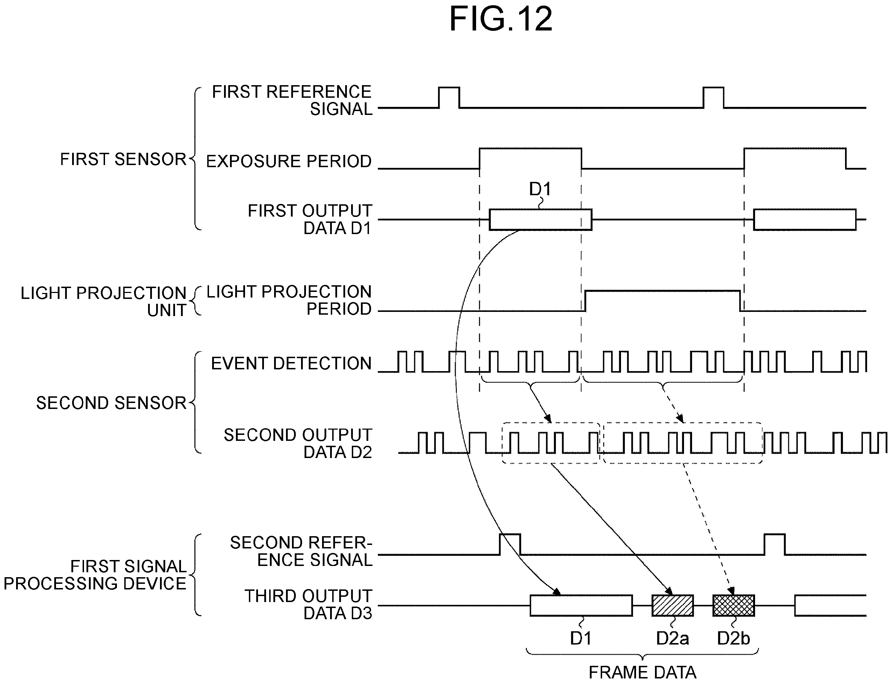

FIG. 11 is a functional block diagram illustrating a schematic configuration example of an imaging device according to the third example. FIG. 12 is a timing chart illustrating a schematic operation example of the imaging device according to the third example.

As illustrated in FIG. 11, as in the imaging device 1B according to the second example, an imaging device 1C according to the third example further includes the light projection unit 16 in addition to the configuration of the imaging device 1A according to the first example. However, in the imaging device 1C according to the third example, the first signal processing device 13 generates the third output data D3 including the second a output data D2a in addition to the first output data D1 and the second b output data D2b.

The second signal processing device 14 corrects (deblur correction) a blur occurring in the image data (first output data D1) in the frame data (third output data D3) using the event data (second a output data D2a) acquired within the exposure period, and reconstructs the image data (first output data D1) using the event data (second b output data D2b) in the frame data (third output data D3) to acquire depth information indicating the distance to the subject. Other configurations and operations may be similar to those of the first example or the second example.

### 1.5.4 Fourth example

In the fourth example, using a ToF sensor as the first sensor 11, and an EVS as the second sensor 12, an imaging device 1D configured to interpolate between frames of depth information acquired using the ToF sensor 11 with the depth information acquired by the structured light method using the EVS 12 will be described. Note that, in the following, a case where the EVS 12 is an asynchronous type (see FIG. 2) will be exemplified, but the present invention is not limited thereto, and may be a synchronous type (see FIG. 3).

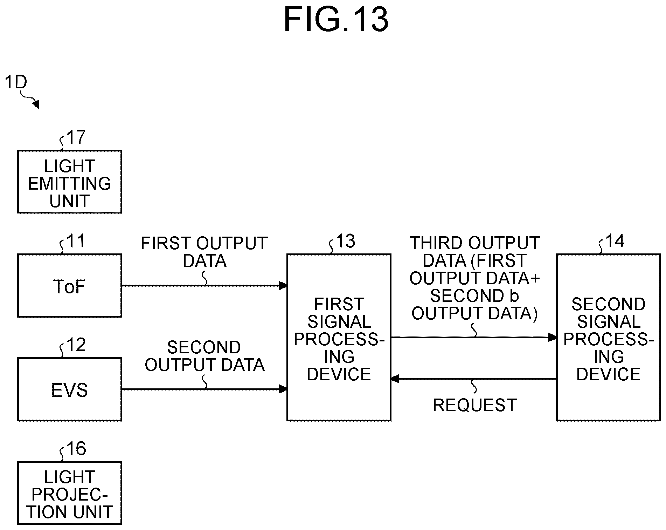

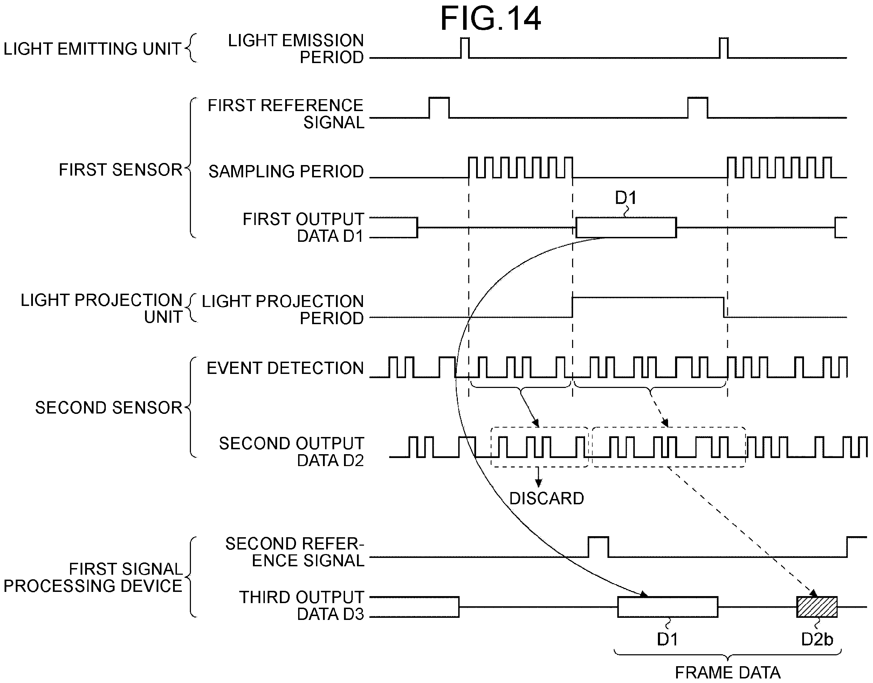

FIG. 13 is a functional block diagram illustrating a schematic configuration example of an imaging device according to the fourth example. FIG. 14 is a timing chart illustrating a schematic operation example of the imaging device according to the fourth example.

As illustrated in FIG. 13, the imaging device 1D according to the fourth example further includes a light emitting unit 17 that replaces the image sensor 11 with the ToF sensor 11 and emits pulsed laser light toward the subject in the configuration same as that of the imaging device 1B according to the second example. The ToF sensor 11 may be a direct ToF method or an indirect ToF method. Furthermore, in a case of the direct ToF method, each pixel constituting the ToF sensor 11 may be, for example, a macropixel including a set of a plurality of single photon avalanche diode (SPAD) pixels. Note that the light projection unit 16 and the light emitting unit 17 may be the same light source or may be separate light sources.

As illustrated in FIG. 14, the light emitting unit 17 emits pulsed laser light at the beginning of each frame period defined by the first reference signal. On the other hand, the ToF sensor 11, which is the first sensor, repeats exposure at a predetermined sampling period in a predetermined sampling period after the light emitting unit 17 emits light, thereby creating a histogram for each macropixel reflecting the distance to the subject. The created histogram is output to the first signal processing device 13 as first output data D1.

On the other hand, the light projection unit 16 projects light of a predetermined pattern toward the subject outside the sampling period instead of outside the exposure period. Other operations may be similar to those of the structured light method described in the second example or the third example.

The first signal processing device 13 discards the event data (second a output data D2a) acquired within the sampling period from among the event streams (second output data D2) input from the EVS 12, and generates frame data (third output data D3) to be output to the second signal processing device 14 using the histogram (first output data D1) input from the ToF sensor 11 and the event data (second b output data D2b) acquired by the EVS 12 outside the sampling period.

The second signal processing device 14 generates the depth information indicating the distance to the subject using a histogram D1 in the frame data (third output data D3). Furthermore, the second signal processing device 14 interpolates between frames of the depth information acquired using the ToF sensor 11 by reconstructing the image data (first output data D1) using the event data (second b output data D2b) and generating the depth information indicating the distance to the subject.

As described above, by interpolating frames between frames of the depth information acquired using the ToF sensor 11 with the depth information acquired by the structured light method using the EVS 12, it is possible to acquire the depth information dense in the time axis direction, and thus, it is possible to identify a more detailed distance to the subject. Other configurations and operations may be similar to those in any of the first to third examples.

### 1.6 Deblur correction and frame interpolation

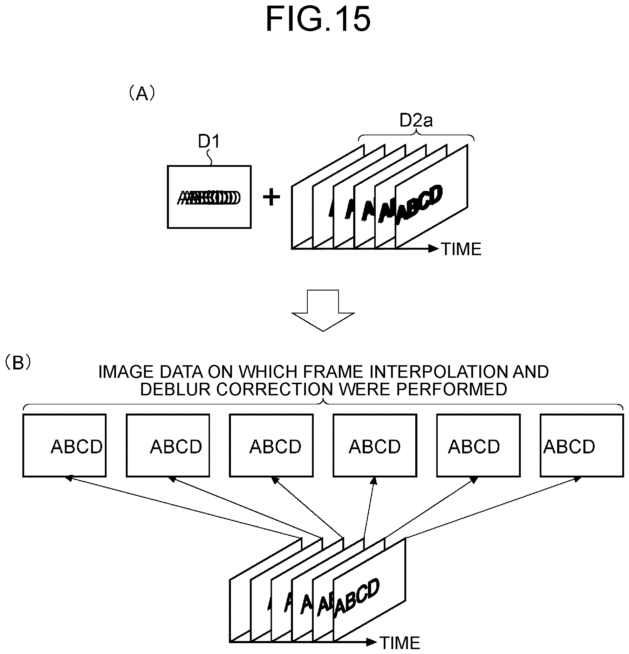

Here, the deblur correction and the frame interpolation of the image data exemplified above will be described. FIG. 15 is a diagram for describing the deblur correction and the frame interpolation according to the present embodiment.

As illustrated in (A) of FIG. 15, the frame data (third output data D3) output from the first signal processing device 13 includes the image data (first output data D1) acquired by the image sensor 11 and the event data (second a output data D2a) acquired within the exposure time in the EVS 12. While one piece of image data (first output data D1) is generated during one frame period defined by the first reference signal, a plurality of pieces of image data (hereinafter, it is also referred to as event images) can be reconstructed from event data (second a output data D2a) acquired during one frame period.

Therefore, as illustrated in (B) of FIG. 15, the movement (movement direction, movement distance, etc.) of the subject during the exposure period can be identified based on the plurality of event images reconstructed from the event data (the second a output data D2a), and the blur generated in the image data (the first output data D1) can be corrected based on the identified movement of the subject.

Furthermore, as illustrated in (B) of FIG. 15, it is also possible to acquire an optical flow of each region in the image data (first output data D1) using a plurality of event images reconstructed from the event data (second a output data D2a) and interpolate image data between frames based on the acquired optical flow.

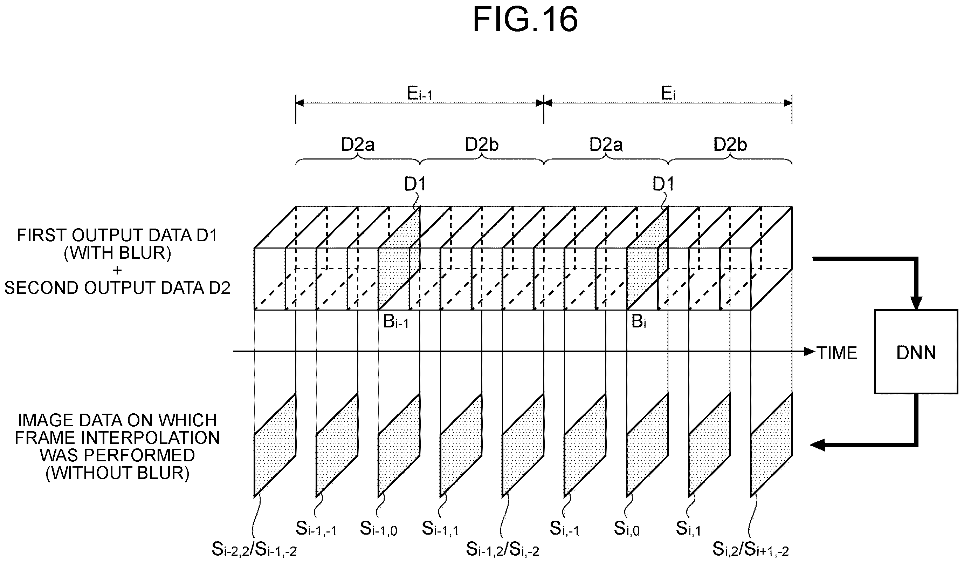

As illustrated in FIG. 16, it is also possible to perform frame interpolation on the image data outside the exposure time based on the event data (the second b output data D2b) acquired outside the exposure time by the EVS 12.

Furthermore, the generation of the image data to be interpolated is not limited to the above-described method based on the optical flow, and for example, various methods such as a method using machine learning using a deep neural network (DNN) using the image data (first output data D1) and the event data (second output data D2) as inputs may be used.

### 1.7 Frame interpolation of depth information

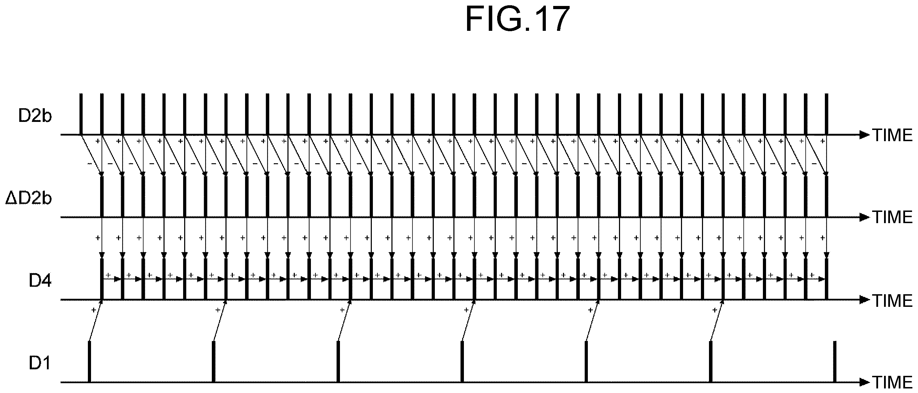

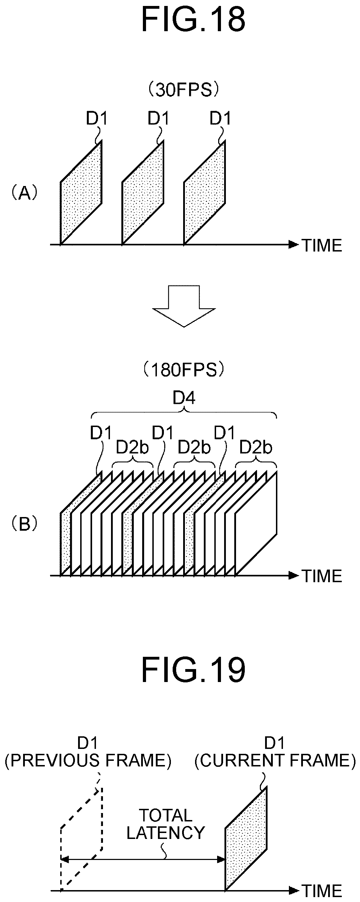

Next, frame interpolation of the depth information exemplified above will be described. FIG. 17 is a diagram for describing frame interpolation of depth information according to the present embodiment. FIGS. 18 to 20 are diagrams for describing effects acquired by frame interpolation of depth information according to the present embodiment. In the following description, for understanding, the reference sign of the depth information generated from the first output data D1 (histogram) is D1, and the reference sign of the depth information acquired from the image data reconstructed from the event data outside the sampling period (the second b output data D2b) is D2b. Further, the reference sign of the depth information finally acquired by performing frame interpolation on the depth information D1 using the depth information D2b is set to D4.

As illustrated in FIG. 17, the frame rate of the depth information D2b acquired from the image data reconstructed from the event data (second b output data D2b) is higher than the frame rate of the depth information D1 generated from the first output data D1 (histogram). Therefore, by interpolating frames between frames of the depth information D1 generated from the first output data D1 (histogram) with the depth information D2b acquired from the image data reconstructed from the event data (the second b output data D2b), it is possible to acquire the depth information with a higher rate.

Specifically, for example, a difference ΔD2b between the preceding and subsequent frames of the depth information D2b acquired from the image data reconstructed from the event data (the second b output data D2b) is acquired, and the difference ΔD2b and the depth information D1 generated from the first output data D1 (histogram) are added, whereby the depth information D2b of the next frame of the depth information D1 is generated. Thereafter, the depth information D2b interpolated up to the depth information D1 of the next frame can be acquired by adding the difference ΔD2b between the corresponding pieces of depth information D2b to the depth information D2b generated as the previous frame.

By repeating the above operation, it is possible to finally generate the depth information D4 with a rate higher than that of the depth information D1.

For example, as illustrated in FIG. 18, it is possible to generate the depth information D4 of 30 fps by interpolating the depth information D2b for 5 frames between the frames of the depth information D1 of 180 fps.

Furthermore, for example, as illustrated in FIG. 19, the total latency between the depth information D4 depends on the delay amount when the event data (the second b output data D2b) is generated, but since the EVS 12 can generate the event data (the second b output data D2b) with a rate higher than that of the ToF sensor 11, the total latency between the depth information D4 can be minimized.

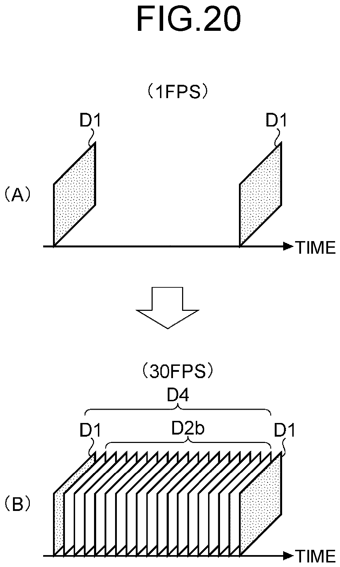

Furthermore, for example, as illustrated in FIG. 20, by interpolating frames between frames of the depth information D1 with the depth information D2b, even in a case where the frame rate of the depth information D1 is lowered, the depth information D4 having a sufficient frame rate can be acquired. As a result, the frame rate of the histogram (first output data D1) output from the ToF sensor 11 can be lowered, so that power consumption can also be reduced.

### 1.8 Configuration example of imaging device

Next, configurations of the imaging devices 1A to 1D exemplified above with reference to FIGS. 7 to 14 will be described.

### 1.8.1 First configuration example

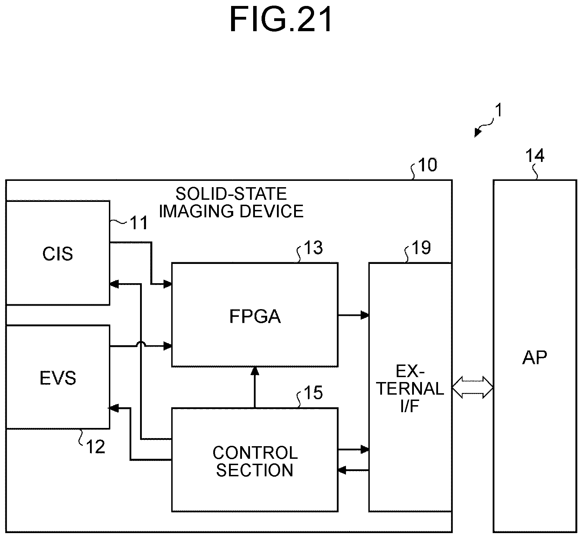

First, a configuration example of the imaging device 1A according to the first example described above with reference to FIGS. 7 and 8 will be described. FIG. 21 is a block diagram illustrating a configuration example of an imaging device according to the first configuration example of the present embodiment. As illustrated in FIG. 21, in the present configuration example, the imaging device 1 includes, for example, a solid-state imaging device 10 and an application processor 14 as a second signal processing device.

The solid-state imaging device 10 includes a control section 15, a light projection unit 16, and an external interface (I/F) 19 in addition to the image sensor 11 as a first sensor, the EVS 12 as a second sensor, and the FPGA 13 as a first signal processing device.

The control section 15 includes, for example, an information processing device such as a central processing unit (CPU), and controls each unit of the solid-state imaging device 10.

The external I/F 19 may be, for example, a communication adapter for establishing communication with the external application processor 14 via a communication network conforming to an any standard such as a controller area network (CAN), a local interconnect network (LIN), FlexRay (registered trademark), a mobile industry processor interface (MIPI), or low voltage differential signaling (LVDS) in addition to a wireless local area network (LAN) or a wired LAN.

Here, for example, in a case where the solid-state imaging device 10 is mounted on a vehicle or the like, the application processor 14 may be an engine control unit (ECU) or the like mounted on the vehicle or the like. Furthermore, in a case where the solid-state imaging device 10 is mounted on an autonomous mobile robot such as a domestic pet robot or an autonomous mobile object such as a robot vacuum cleaner, an unmanned aerial vehicle, or a following conveyance robot, the application processor 14 may be a control device or the like that controls the autonomous mobile object. Furthermore, in a case where the solid-state imaging device 10 is mounted on an electronic device such as a mobile phone, a smartphone, or a tablet terminal, the application processor 14 may be a CPU incorporated in the electronic device, a server (including a cloud server or the like) connected to the electronic device via a network, or the like.

The FPGA 13 receives the first output data D1 (image data) output from the image sensor 11 in synchronization with the first reference signal and the second output data D2 (event stream) output from the EVS 12 asynchronously. Then, the FPGA 13 generates third output data D3 (frame data) including the designated data in synchronization with the second reference signal according to the request input from the application processor 14 via the external I/F 19. The generated third output data is output to the application processor 14 via the external I/F 19.

The application processor 14 executes the predetermined processing such as deblurring processing, recognition processing, and SLAM on the third output data output from the solid-state imaging device 10.

### 1.8.2 Second configuration example

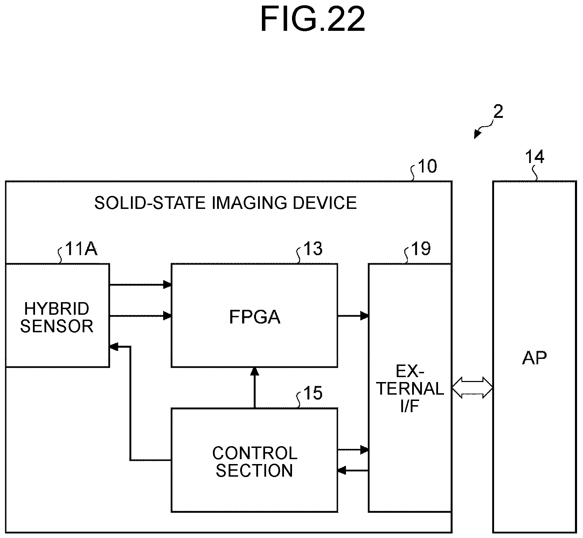

FIG. 22 is a block diagram illustrating a configuration example of an imaging device according to the second configuration example of the present embodiment. As illustrated in FIG. 22, the imaging device 2 according to the present configuration example has a configuration in which the image sensor 11 and the EVS 12 in the solid-state imaging device 10 are replaced with a hybrid sensor 11A in a configuration similar to that of the imaging device 1 described with reference to FIG. 21 in the first configuration example.

Although details will be described later, the hybrid sensor 11A according to the second configuration example is, for example, a sensor in which an image sensor and an EVS are integrated into one chip, and that can output image data (corresponding to first output data) and event data (corresponding to second output data). However, the hybrid sensor 11A according to the present embodiment is not limited thereto, and for example, a combination of various sensors used as the first sensor 11 and the second sensor 12, such as a ToF sensor and an EVS or an image sensor and a ToF sensor, may be integrated into one chip.

Other configurations may be similar to those of the imaging device 1 according to the first configuration example, and thus detailed description thereof will be omitted here.

### 1.8.3 Third configuration example

Next, configuration examples of the imaging devices 1B to 1D according to the second to fourth examples described above with reference to FIGS. 9, 10, 11, 12, 13, and 14 will be described. Note that, in the present configuration example, a case where the light projection unit 16 and the light emitting unit 17 in the imaging device 1D according to the fourth example are configured by a common light source 18 will be exemplified.

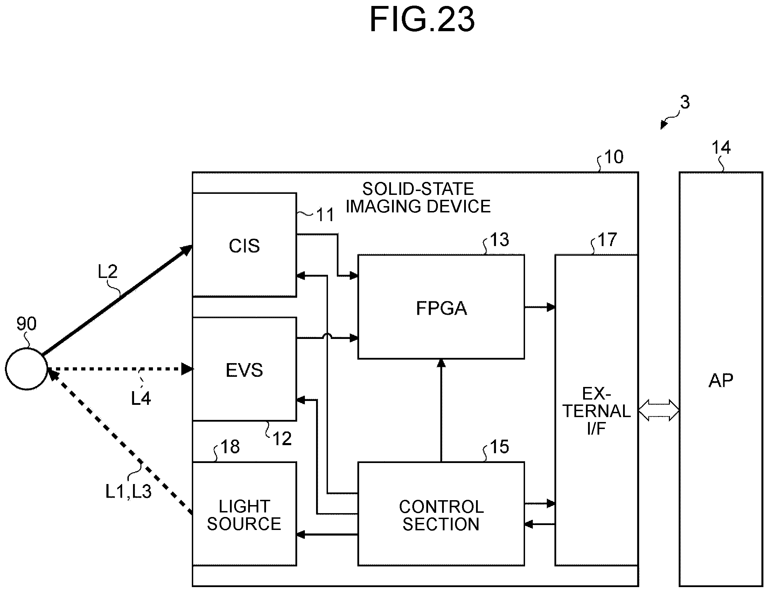

FIG. 23 is a block diagram illustrating a configuration example of an imaging device according to the third configuration example of the present embodiment. As illustrated in FIG. 23, an imaging device 3 according to the present configuration example has a configuration in which a light source 18 is added in a configuration similar to that of the imaging device 1 described with reference to FIG. 21 in the first configuration example.

In the second example and the third example described above, the light source 18 projects light L3 of a predetermined pattern to a subject 90 outside the exposure period of the image sensor 11. On the other hand, the EVS 12 detects the shape of light L4 projected on the subject 90 and generates event data (the second b output data D2b).

In the above-described fourth example, the light source 18 emits pulsed laser light L1 during the exposure period of the image sensor 11. On the other hand, the ToF sensor 11 detects reflected light L2 reflected by the subject 90 at a predetermined sampling period, and generates a histogram (first output data D1) reflecting the distance to the subject 90. In addition, the light source 18 projects light L3 of a predetermined pattern to the subject 90 outside the exposure period of the image sensor 11. On the other hand, the EVS 12 detects the shape of light L4 projected on the subject 90 and generates event data (the second b output data D2b).

Other configurations may be similar to those of the imaging device 1 according to the first configuration example, and thus detailed description thereof will be omitted here.

### 1.9 Specific configuration example

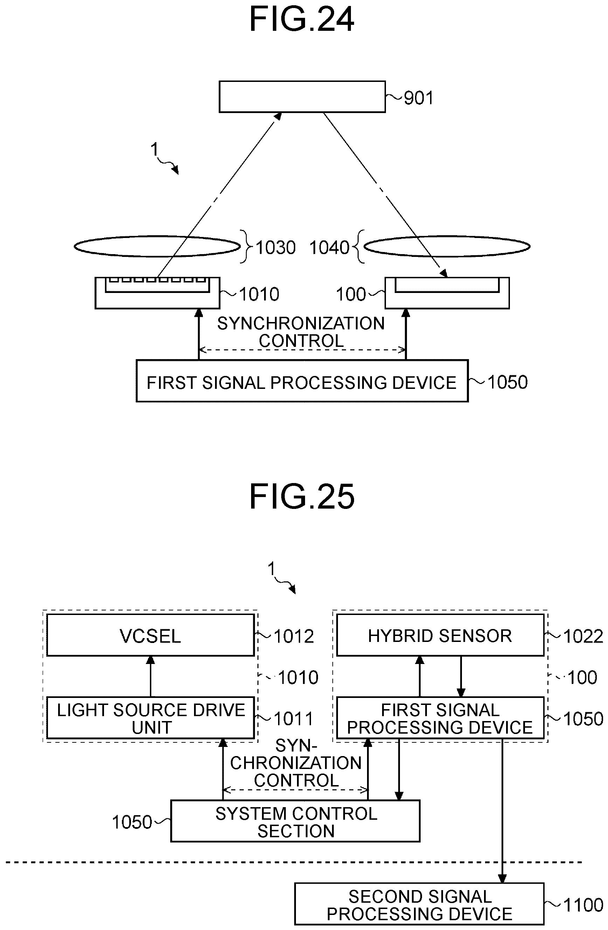

Next, a specific configuration example of the imaging device 1 according to the present embodiment will be described. FIG. 24 is a schematic diagram illustrating a schematic configuration example of the imaging device according to the present embodiment, and FIG. 25 is a block diagram illustrating a system configuration example of the imaging device according to the present embodiment.

As illustrated in FIG. 24, the imaging device 1 according to the present embodiment includes a light source 1010, an irradiation lens 1030, an imaging lens 1040, a solid-state imaging device 100, and a first signal processing device 1050. The light source 1010 corresponds to, for example, the light source 18 in FIG. 23, and the solid-state imaging device 100 corresponds to the solid-state imaging device 10 in FIG. 21 or 22. That is, in the present example, the light source 18 is provided outside the solid-state imaging device 10. Note that the irradiation lens 1030 is not an essential component and may be omitted.

As illustrated in FIG. 25, the light source 1010 includes, for example, a vertical cavity surface emitting laser (VCSEL) 1012 and a light source drive unit 1011 that drives the VCSEL 1012. However, the present invention is not limited to the VCSEL 1012, and various light sources such as a light emitting diode (LED) may be used. Furthermore, the light source 1010 may be any of a point light source, a face light source, and a line light source. In the case of a face light source or a line light source, the light source 1010 may have, for example, a configuration in which a plurality of point light sources (for example, VCSEL) is disposed one-dimensionally or two-dimensionally. In the present embodiment, the light source 1010 emits, for example, infrared (IR) light. However, the present invention is not limited thereto, and the light emitted from the light source 1010 may be light of a wavelength band different from the wavelength band of visible light.

Irradiation lens 1030 is disposed close to the emission face of light source 1010, and converts light emitted from light source 1010 into irradiation light having a predetermined divergence angle.

The imaging lens 1040 is disposed close to the light receiving face of the solid-state imaging device 100, and forms an image by incident light on the light receiving face of the solid-state imaging device 100. The incident light can also include reflected light emitted from light source 1010 and reflected by a subject 901. For example, in the case of eye tracking, the subject 901 may be around the user's eye including the eyeball, and in the case of SLAM, the object may be an object existing around the self-position. However, the object is not limited thereto, and various objects can be the subject 901 according to the purpose of use of the imaging device 1.

Although details thereof will be described later, as illustrated in FIG. 25, the solid-state imaging device 100 includes, for example, a hybrid sensor 1022 in which pixels (hereinafter, referred to as luminance pixels) for detecting luminance and pixels (hereinafter, referred to as event pixels) for detecting an event are disposed in a two-dimensional lattice, and a sensor control section 1021 that generates image data (first output data D1) based on a luminance signal detected by the luminance pixel and data (second output data D2) based on event data detected by the event pixels by driving the hybrid sensor 1022. Note that, although details will be described later, a configuration including a luminance pixel (also referred to as a first pixel) may constitute an image sensor (first sensor 11), and a configuration including an event pixel (also referred to as a second pixel) may constitute an EVS (second sensor 12).

As described above, the first signal processing device 1050 includes a processing device such as an FPGA, an MCU, or an MPU, a DSP, an ASIC, or an application specific standard product (ASSP), and drives the VCSEL1012 via the light source drive unit 1011. Furthermore, the first signal processing device 1050 acquires the first output data D1 and the second output data D2 by controlling the solid-state imaging device 100, and generates the third output data D3 from the acquired data.

For example, the irradiation light emitted from the light source 1010 is projected onto a subject (also referred to as an object to be measured or an object) 901 through the irradiation lens 1030. The projected light is reflected by the subject 901. Then, the light reflected by the subject 901 passes through the imaging lens 1040 and enters the solid-state imaging device 100. The EVS (corresponding to the second sensor 12) in the hybrid sensor 1022 of the solid-state imaging device 100 receives the reflected light reflected by the subject 901 and generates event data (second output data D2). On the other hand, the image sensor (corresponding to the first sensor 11) in the hybrid sensor 1022 receives, for example, visible light in the incident light and generates image data (first output data D1).

The third output data D3 generated by the first signal processing device 1050 is supplied to a second signal processing device 1100. As described above, the second signal processing device 1100 includes, for example, an information processing device such as an application processor, and executes the predetermined processing such as a deblur correction, frame interpolation, image processing, recognition processing, and SLAM based on image data and event data input from the first signal processing device 1050.

### 1.10 Configuration example of hybrid sensor

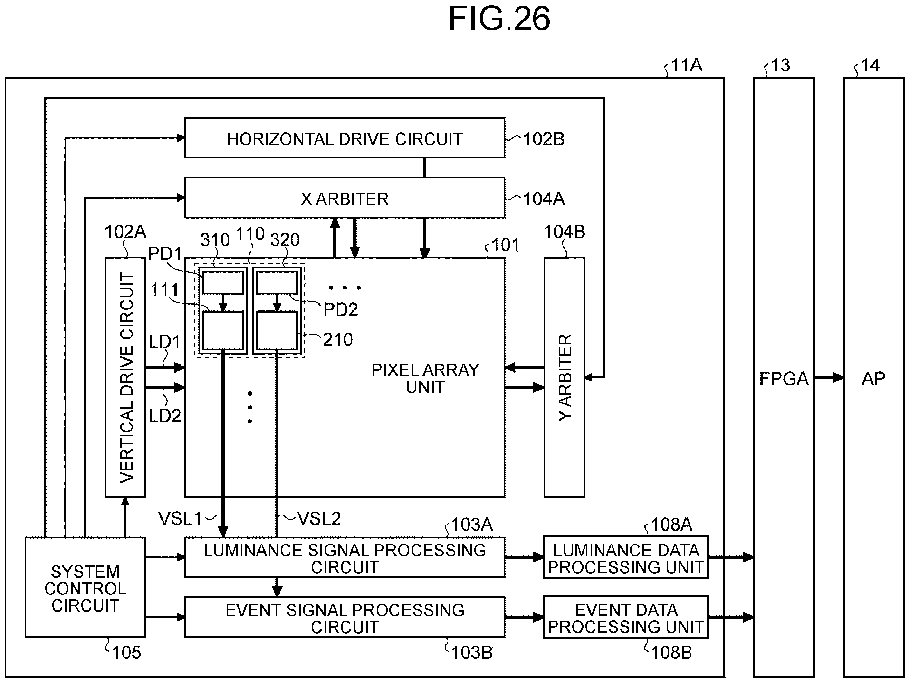

FIG. 26 is a schematic configuration example of the hybrid sensor according to the present embodiment, and is a block diagram illustrating an example of a pixel separation configuration. As illustrated in FIG. 26, the hybrid sensor 11A according to the present embodiment includes, for example, a pixel array unit 101, a vertical drive circuit 102A, a horizontal drive circuit 102B, an X arbiter 104A, a Y arbiter 104B, a luminance signal processing circuit 103A, an event signal processing circuit 103B, a system control circuit 105, a luminance data processing unit 108A, and an event data processing unit 108B.

The pixel array unit 101 has a configuration in which unit pixels 110 each to be a unit of repetition in a pixel layout are disposed in a row direction and a column direction, that is, in a two-dimensional lattice (also referred to as a matrix pattern). A row direction (also referred to as a row direction) refers to an array direction of pixels in a pixel row (lateral direction in the figure), and a column direction (also referred to as a column direction) refers to an array direction of pixels in a pixel column (longitudinal direction in drawings). Note that the unit of repetition here is different from the unit of repetition in a color filter array such as a Bayer array or a quad-Bayer array, and may be a constituent unit repeated in element design.

Each unit pixel 110 includes one or more luminance pixels 310 and one or more event pixels 320. In the present description, the luminance pixel 310 and the event pixel 320 may be simply referred to as pixels, respectively. Although details of a specific circuit configuration and pixel structure of the unit pixel 110 will be described later, in the pixel separation configuration, the luminance pixel 310 and the event pixel 320 each include an individual photoelectric conversion unit. Specifically, the luminance pixel 310 includes a photoelectric conversion unit PD1 that generates and accumulates a charge according to the luminance of the incident light, and generates a luminance signal of a voltage according to the luminance. On the other hand, the event pixel 320 includes a photoelectric conversion unit PD2 that generates a charge according to the luminance of the incident light, and in a case where a change in luminance of the incident light is detected based on the photocurrent flowing from the photoelectric conversion unit PD2, outputs a request for requesting reading from the event pixel and outputs event data indicating that an event has been detected according to arbitration by an arbiter that receives the request.

In the pixel array unit 101, the pixel drive lines LD1 and LD2 are wired along the row direction for each pixel row, and the vertical signal lines VSL1 and VSL2 are wired along the column direction for each pixel column with respect to the matrix-like pixel array. For example, the pixel drive line LD1 is connected to the luminance pixel 310 of each row, and the pixel drive line LD2 is connected to the event pixel 320 of each row. On the other hand, for example, the vertical signal line VSL1 is connected to the luminance pixel 310 of each column, and the vertical signal line VSL2 is connected to the event pixel 320 of each column. However, the present invention is not limited thereto, and the pixel drive lines LD1 and LD2 may be wired so as to be orthogonal to each other. Similarly, the vertical signal lines VSL1 and VSL2 may be wired so as to be orthogonal to each other. For example, the pixel drive line LD1 may be wired in the row direction, the pixel drive line LD2 may be wired in the column direction, the vertical signal line VSL1 may be wired in the column direction, and the vertical signal line VSL2 may be wired in the row direction.

The pixel drive line LD1 transmits a control signal for performing driving when reading a luminance signal from the luminance pixel 310. The pixel drive line LD2 transmits a control signal for bringing the event pixel 320 into an active state in which an event can be detected. In FIG. 26, each of the pixel drive lines LD1 and LD2 is illustrated as one wiring, but the number is not limited to one. One end of each of the pixel drive line LD1 and the pixel drive line LD2 is connected to an output end corresponding to each row of the vertical drive circuit 102A.

### (Driving configuration of luminance pixel)

Each luminance pixel 310 includes the photoelectric conversion unit PD1 that photoelectrically converts incident light to generate a charge, and a pixel circuit 111 that generates a luminance signal of a voltage value corresponding to the charge amount of the charge generated in the photoelectric conversion unit PD1, and causes the luminance signal to occur in the vertical signal line VSL1 under the control of the vertical drive circuit 102A.

The vertical drive circuit 102A includes a shift register, an address decoder, and the like, and drives the luminance pixels 310 of the pixel array unit 101 at the same time for all pixels or in units of rows. That is, the vertical drive circuit 102A and the system control circuit 105 that controls the vertical drive circuit 102A constitute a drive unit that controls the operation of each luminance pixel 310 of the pixel array unit 101. Although a specific configuration of the vertical drive circuit 102A is not illustrated, the vertical drive circuit generally includes two scanning systems of a reading scanning system and a sweeping scanning system.

The reading scanning system sequentially and selectively scans each pixel of the pixel array unit 101 row in units of rows in order to read a signal from each pixel. The luminance signal read from each pixel is an analog signal. The sweeping scanning system performs sweep scanning on a read row on which read scanning is performed by the reading scanning system prior to the read scanning by an exposure time.

By the sweep scanning by the sweeping scanning system, unnecessary charges are swept out from the photoelectric conversion unit PD1 of each luminance pixel 310 in the read row, whereby the photoelectric conversion unit PD1 is reset. Then, by sweeping out (resetting) unnecessary charges by the sweeping scanning system, a so-called electronic shutter operation is performed. Here, the electronic shutter operation refers to an operation of discarding the charge of the photoelectric conversion unit PD1 and newly starting exposure (starting accumulation of charge).

The signal read by the read operation by the reading scanning system corresponds to the amount of light received after the immediately preceding read operation or electronic shutter operation. Then, a period from the read timing by the immediately preceding read operation or the sweep timing by the electronic shutter operation to the read timing by the current read operation is a charge accumulation period (also referred to as an exposure period) of each pixel.

The luminance signal output from each luminance pixel 310 of the pixel row selectively scanned by the vertical drive circuit 102A is input to the luminance signal processing circuit 103A through each of the vertical signal lines VSL1 for each pixel column. The luminance signal processing circuit 103A performs a predetermined signal process on the luminance signal output from each luminance pixel 310 of the selected row through the vertical signal line VSL1 for each pixel column of the pixel array unit 101, and temporarily holds the luminance signal after the signal process.

Specifically, the luminance signal processing circuit 103A performs at least noise removal processing, for example, correlated double sampling (CDS) processing or double data sampling (DDS) processing, as the signal process. For example, the fixed pattern noise unique to the pixel such as the reset noise and the threshold value variation of the amplification transistor in the pixel is removed by the CDS processing. The luminance signal processing circuit 103A also has, for example, an analog-digital (AD) conversion function, and converts an analog luminance signal read from the photoelectric conversion unit PD1 into a digital signal to output the digital signal.

The horizontal drive circuit 102B includes a shift register, an address decoder, and the like, and sequentially selects the pixel circuits 111 corresponding to the pixel columns of the luminance signal processing circuit 103A. By the selective scanning by the horizontal drive circuit 102B, luminance signals subjected to signal process for each pixel circuit 111 by the luminance signal processing circuit 103A are sequentially output.

### (Driving configuration of event pixel)

Each event pixel 320 includes the photoelectric conversion unit PD2 that generates a charge according to the luminance of the incident light, and an address event detection circuit 210 that detects the presence or absence of an event based on a change in the current value of the photocurrent flowing out of the photoelectric conversion unit PD2, and detects the presence or absence of the event based on whether a change exceeding a predetermined threshold value has occurred in the photocurrent according to the luminance of the incident light. For example, each event pixel 320 detects that the change in luminance exceeds or falls below a predetermined threshold value as an event.

When detecting an event, the event pixel 320 outputs a request for requesting permission to output an event data indicating the occurrence of the event to each of the X arbiter 104A and the Y arbiter 104B. Then, the event pixel 320 outputs an event data to the event signal processing circuit 103B when receiving a response indicating permission to output an event data from each of the X arbiter 104A and the Y arbiter 104B.

The event signal processing circuit 103B performs a predetermined signal process on the event data input from the event pixel 320 to output the event data after the signal process.

As described above, the change in the photocurrent generated by the event pixel 320 can also be regarded as a change in light amount (change in luminance) of the light incident on the photoelectric conversion unit PD2 of the event pixel 320. Therefore, it can also be said that the event is a change in light amount (change in luminance) of the event pixel 320 exceeding the predetermined threshold value. The event data indicating the occurrence of the event includes at least position information such as coordinates indicating the position of the event pixel 320 where the change in light amount as the event has occurred. The event data can include the polarity of the change in light amount in addition to the position information.

For a series of event data output at the timing when an event occurs from the event pixel 320, as long as the interval between the pieces of event data is maintained at the time when the event occurs, it can be said that the event data implicitly includes time information indicating a relative time when the event occurs.

However, when the interval between the pieces of event data is not maintained as it is at the time of occurrence of the event when the event data is stored in the memory or the like, the time information implicitly included in the event data is lost. Therefore, before the interval between the pieces of event data is not maintained as it is at the time of occurrence of the event, the event signal processing circuit 103B may include time information, such as a time-stamp or the like, indicating a relative time at which the event has occurred in the event data.

### (Other configurations)

The system control circuit 105 includes a timing generator that generates various timing signals, and the like, and performs drive control of the vertical drive circuit 102A, the horizontal drive circuit 102B, the X arbiter 104A, the Y arbiter 104B, the luminance signal processing circuit 103A, the event signal processing circuit 103B, and the like based on various timings generated by the timing generator.

Each of the luminance data processing unit 108A and the event data processing unit 108B has at least an arithmetic processing function, and performs various signal process such as arithmetic process on the image data (image frame data and event frame data) output from the luminance signal processing circuit 103A or the event signal processing circuit 103B.

The image data output from the luminance data processing unit 108A or the event data processing unit 108B is output to, for example, the FPGA 13 disposed on the same chip or an external chip.

Note that the hybrid sensor 11A may include a storage unit for temporarily holding data necessary for a signal process by the luminance data processing unit 108A and the event data processing unit 108B, data processed by any one or more of the luminance signal processing circuit 103A, the event signal processing circuit 103B, the luminance data processing unit 108A, and the event data processing unit 108B, and the like.

### 1.10.1 Another configuration example of hybrid sensor

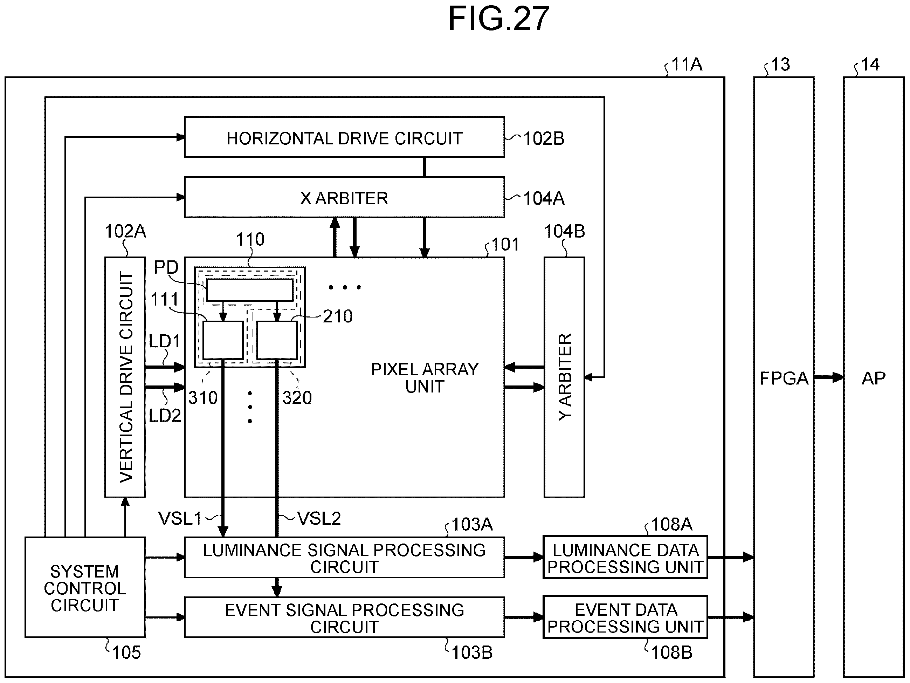

FIG. 27 is a block diagram illustrating another schematic configuration example of the hybrid sensor according to the present embodiment and an example of a pixel sharing configuration. As can be seen by comparing FIG. 26 and FIG. 27, in the pixel sharing configuration, one or more luminance pixels 310 and one or more event pixels 320 in the unit pixel 110 share one photoelectric conversion unit PD. In other words, the pixel circuit 111 and the luminance signal processing circuit 103A corresponding to the first signal processing unit that acquires the luminance signal and the address event detection circuit 210 and the event signal processing circuit 103B corresponding to the second signal processing unit that acquires the event signal are connected to the common photoelectric conversion unit PD. Other configurations and operations may be similar to those of the hybrid sensor 11A according to the pixel separation configuration described with reference to FIG. 26, and thus, detailed description thereof is omitted here.

### 1.10.2 Pixel array example of hybrid sensor

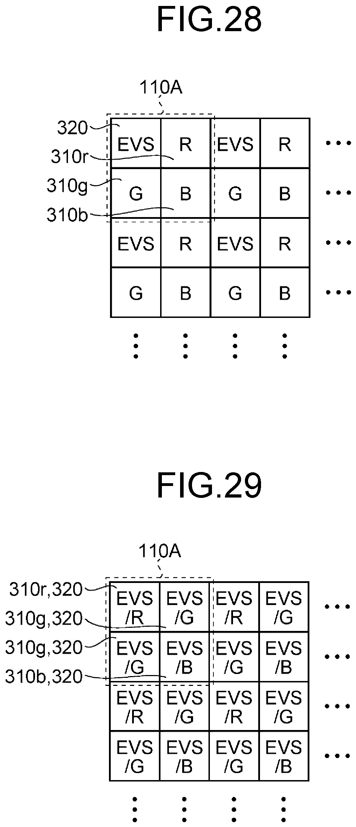

FIG. 28 is a schematic diagram illustrating a pixel array example of the hybrid sensor according to the present embodiment. As illustrated in FIG. 28, in the pixel separation configuration illustrated in FIG. 26, for example, one of the four pixels constituting the array pattern 110A which is a repetition unit of the Bayer array may be constituted by the event pixels 320, and the remaining three may be constituted by the luminance pixels 310r, 310b, and 310g.

### 1.10.3 Another pixel array example of hybrid sensor

FIG. 29 is a schematic diagram illustrating an example of another pixel array of the hybrid sensor according to the present embodiment. As illustrated in FIG. 29, in the pixel sharing configuration illustrated in FIG. 27, each of the four pixels constituting the array pattern 110A, which is a repetition unit of the Bayer array, may include sharing pixels that share the luminance pixels 310r, 310g, or 310b and the event pixel 320.

However, in the pixel sharing configuration, it is not necessary that all the pixels are shared pixels of the luminance pixel 310 and the event pixel 320, and some (one or two or more) of the plurality of pixels constituting the array pattern 110A may be shared pixels.

As described above, the luminance pixels 310 constituting the image sensor and the event pixels 320 constituting the EVS are uniformly mixed and disposed in the pixel array unit 101, so that the optical axes of the image sensor and the EVS can coincide or substantially coincide with each other. Accordingly, even in a case where a sensor used in eye tracking, SLAM, or the like is switched between, for example, an image sensor and an EVS, it is possible to omit or simplify processing such as geometric transformation for matching a coordinate system of image data acquired by each sensor, and thus, it is possible to prevent an increase in processing speed from being suppressed.

Furthermore, by using a configuration in which the luminance pixel 310 and the event pixel 320 are mixed in the pixel array unit 101, as in a case where the image sensor and the EVS are configured using different chips, it is possible to suppress waste of power due to the sensor that is not used brought constantly into an on state, and thus, it is possible to suppress an increase in power consumption.

### 1.11 Stacked structure example of solid-state imaging device

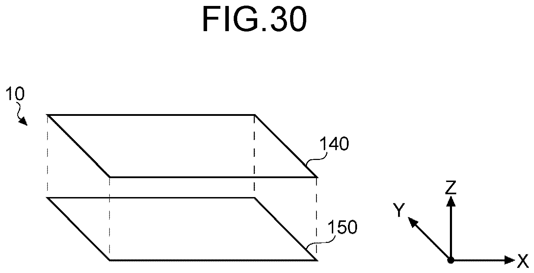

FIG. 30 is a diagram illustrating an exemplary stacked structure of the solid-state imaging device according to the present embodiment. As illustrated in FIG. 30, the solid-state imaging device 10 may have a structure in which a pixel chip 140 and a circuit chip 150 are vertically stacked. The pixel chip 140 is, for example, a semiconductor chip including a photoelectric conversion unit of each of the luminance pixel 310 and the event pixel 320 and part of a circuit configuration in the luminance pixel 310 and the event pixel 320, and the circuit chip 150 is a semiconductor chip including a configuration other than the configuration disposed in the pixel chip 140.

For bonding the pixel chip 140 and the circuit chip 150, for example, so-called direct bonding can be used, in which the joint surfaces are flattened and are bonded to each other by an electronic force. However, the present invention is not limited thereto, and for example, so-called Cu-Cu bonding in which copper (Cu) electrode pads formed on the joint surfaces are bonded to each other, bump bonding, or the like can also be used.

Furthermore, the pixel chip 140 and the circuit chip 150 are electrically connected via a connection portion such as a through contact via (TCV) penetrating the semiconductor substrate, for example. For the connection using the TCV, for example, a so-called twin TCV method in which two TCVs of a TCV provided in the pixel chip 140 and a TCV provided from the pixel chip 140 to the circuit chip 150 are connected on an outer face of the chip, a so-called shared TCV method in which both are connected by a TCV penetrating from the pixel chip 140 to the circuit chip 150, or the like can be used.

However, when Cu-Cu bonding or bump bonding is used for bonding the pixel chip 140 and the circuit chip 150, the two may be electrically connected via a Cu-Cu bonding portion or a bump bonding portion.

### 2. Application example to mobile object

The technology according to the present disclosure can be applied to various products. For example, the technology according to the present disclosure may be further applied to a device mounted on any of various mobile bodies such as automobiles, electric vehicles, hybrid electric vehicles, motorcycles, bicycles, personal mobility, airplanes, drones, ships, and robots.

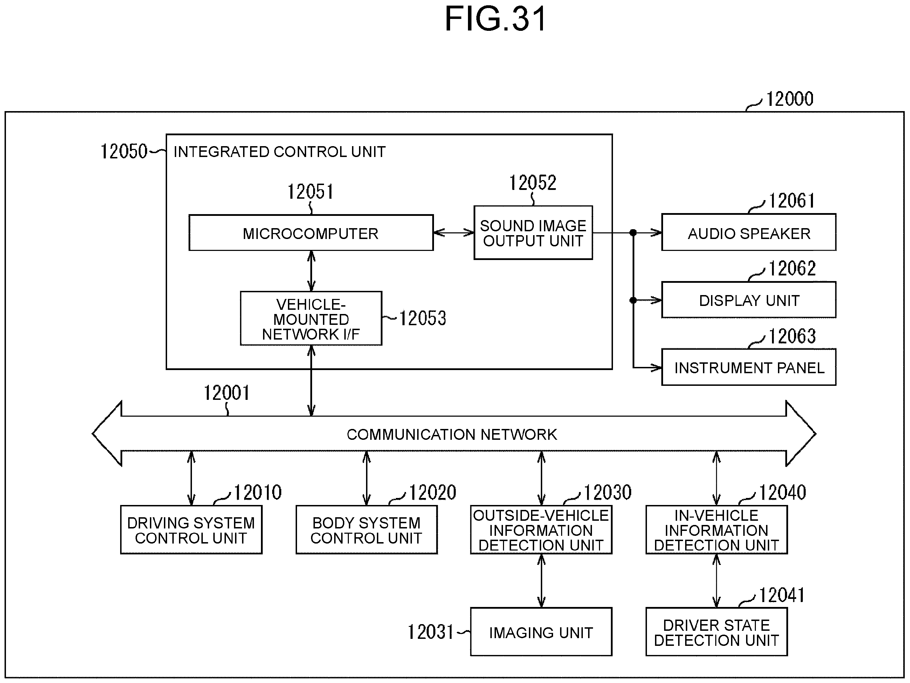

FIG. 31 is a block diagram depicting an example of schematic configuration of a vehicle control system as an example of a mobile object control system to which the technology according to an embodiment of the present disclosure can be applied.

The vehicle control system 12000 includes a plurality of electronic control units connected to each other via a communication network 12001. In the example illustrated in FIG. 31, the vehicle control system 12000 includes a driving system control unit 12010, a body system control unit 12020, an outside-vehicle information detection unit 12030, an in-vehicle information detection unit 12040, and an integrated control unit 12050. In addition, a microcomputer 12051, a sound image output unit 12052, and a vehicle-mounted network interface (I/F) 12053 are illustrated as a function configuration of the integrated control unit 12050.

The driving system control unit 12010 controls the operation of devices related to the driving system of the vehicle in accordance with various kinds of programs. For example, the driving system control unit 12010 functions as a control device for a driving force generating device that generates the driving force of the vehicle, such as an internal combustion engine, a driving motor, or the like, a driving force transmitting mechanism for transmitting the driving force to wheels, a steering mechanism for adjusting the steering angle of the vehicle, a braking device that generates the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detection unit 12030 detects information about the outside of the vehicle including the vehicle control system 12000. For example, the outside-vehicle information detection unit 12030 is connected with an imaging unit 12031. The outside-vehicle information detection unit 12030 makes the imaging unit 12031 image an image of the outside of the vehicle, and receives the imaged image. Based on the received image, the outside-vehicle information detection unit 12030 may perform processing of detecting an object such as a human, a vehicle, an obstacle, a sign, a character on a road surface, or the like, or processing of detecting a distance thereto.

The imaging unit 12031 is an optical sensor that receives light, and which outputs an electric signal corresponding to a received light amount of the light. The imaging unit 12031 can output the electric signal as an image, or can output the electric signal as information about a measured distance. In addition, the light received by the imaging unit 12031 may be visible light, or may be invisible light such as infrared rays or the like.

The in-vehicle information detection unit 12040 detects information about the inside of the vehicle. The in-vehicle information detection unit 12040 is, for example, connected with a driver state detection unit 12041 that detects the state of a driver. The driver state detection unit 12041, for example, includes a camera that images the driver. Based on detection information input from the driver state detection unit 12041, the in-vehicle information detection unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device based on the information about the inside or outside of the vehicle which information is acquired by the outside-vehicle information detection unit 12030 or the in-vehicle information detection unit 12040, and output a control command to the driving system control unit 12010. For example, the microcomputer 12051 can perform cooperative control intended to implement functions of an advanced driver assistance system (ADAS) whose functions include collision avoidance or shock mitigation for the vehicle, following driving based on an inter-vehicle distance, vehicle speed maintaining traveling, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like based on the information about the outside or inside of the vehicle which information is acquired by the outside-vehicle information detection unit 12030 or the in-vehicle information detection unit 12040.

Furthermore, the microcomputer 12051 can output a control command to the body system control unit 12020 based on the vehicle exterior information acquired by the outside-vehicle information detection unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detection unit 12030.

The sound image output unit 12052 transmits an output signal of at least one of a sound and an image to an output device capable of visually or auditorily notifying information to an occupant of the vehicle or the outside of the vehicle. In the example of FIG. 31, an audio speaker 12061, a display unit 12062, and an instrument panel 12063 are illustrated as the output device. The display unit 12062 may, for example, include at least one of an on-board display and a head-up display.

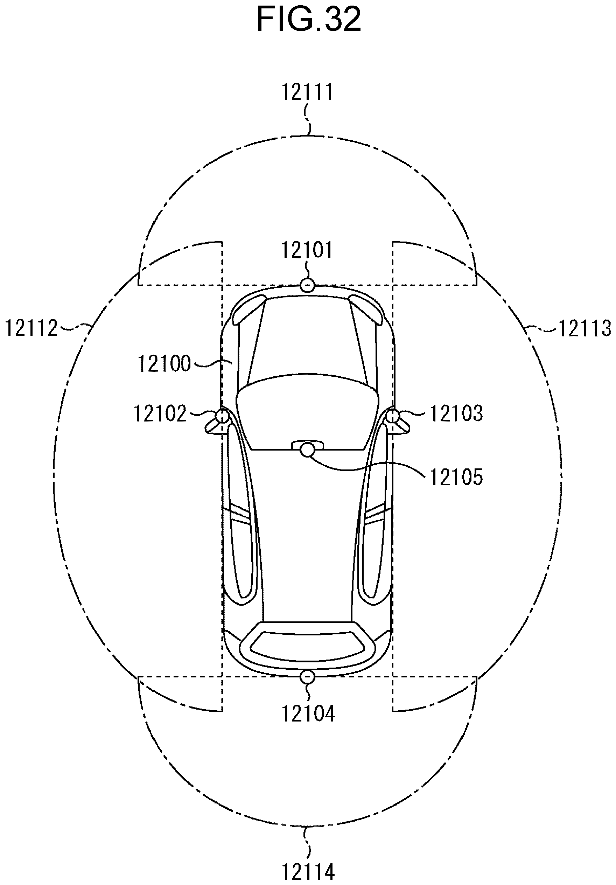

FIG. 32 is a diagram depicting an example of the installation position of the imaging unit 12031.

In FIG. 32, the imaging unit 12031 includes imaging units 12101, 12102, 12103, 12104, and 12105.

The imaging units 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging unit 12101 provided to the front nose and the imaging unit 12105 provided to the upper portion of the windshield within the interior of the vehicle acquire mainly an image of the front of the vehicle 12100. The imaging units 12102 and 12103 provided to the sideview mirrors acquire mainly an image of the sides of the vehicle 12100. The imaging unit 12104 provided to the rear bumper or the back door acquires mainly an image of the rear of the vehicle 12100. The imaging unit 12105 provided to the upper portion of the windshield within the interior of the vehicle is used mainly to detect a preceding vehicle, a pedestrian, an obstacle, a signal, a traffic sign, a lane, or the like.

Incidentally, FIG. 32 depicts an example of imaging ranges of the imaging units 12101 to 12104. An imaging range 12111 represents the imaging range of the imaging unit 12101 provided to the front nose. Imaging ranges 12112 and 12113 respectively represent the imaging ranges of the imaging units 12102 and 12103 provided to the sideview mirrors. An imaging range 12114 represents the imaging range of the imaging unit 12104 provided to the rear bumper or the back door. A bird's-eye image of the vehicle 12100 when viewed from above is acquired by superimposing image data imaged by the imaging units 12101 to 12104, for example.

At least one of the imaging units 12101 to 12104 may have a function of acquiring distance information. For example, at least one of the imaging units 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative velocity with respect to the vehicle 12100) based on the distance information acquired from the imaging units 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set an inter-vehicle distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects based on the distance information acquired from the imaging units 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk level of collision with each obstacle. In a situation in which the collision risk is equal to or higher than a setting value and there is thus a possibility of collision, the microcomputer 12051 outputs a warning to the driver via the audio speaker 12061 or the display unit 12062, and performs forced deceleration or avoidance steering via the driving system control unit 12010, thereby assisting in driving for collision avoidance.

At least one of the imaging units 12101 to 12104 may be an infrared camera that detects infrared rays. The microcomputer 12051 can, for example, recognize a pedestrian by determining whether there is a pedestrian in captured images of the imaging units 12101 to 12104. Such recognition of a pedestrian is, for example, performed by a procedure of extracting characteristic points in the captured images of the imaging units 12101 to 12104 as infrared cameras and a procedure of determining whether it is the pedestrian by performing pattern matching process on a series of characteristic points representing the contour of the object. When the microcomputer 12051 determines that there is a pedestrian in the captured images of the imaging units 12101 to 12104, and thus recognizes the pedestrian, the sound image output unit 12052 controls the display unit 12062 so that a square contour line for emphasis is displayed so as to be superimposed on the recognized pedestrian. The sound image output unit 12052 may also control the display unit 12062 so that an icon or the like representing the pedestrian is displayed at a desired position.

An example of the vehicle control system to which the technique according to the present disclosure can be applied is described above. The technology according to the present disclosure can be applied to, for example, the driver state detection unit 12041 and the imaging unit 12031 among the above-described configurations. By applying the technology according to the present disclosure to the driver state detection unit 12041, it is possible to quickly and accurately execute eye tracking of a driver or a fellow passenger. Furthermore, by applying the technology according to the present disclosure to the imaging unit 12031, it is possible to quickly and accurately acquire the traveling position and posture of the vehicle 12100.

The embodiments of the present disclosure have been described above, the technical scope of the present disclosure is not limited to the above-described embodiments as they are, and various changes can be made without departing from the gist of the present disclosure. Moreover, the components over different embodiments and modifications may be suitably combined.

Further, the effects in each embodiment described in the present specification are merely examples and are not limited, and other effects may be present.

The present technology may also be configured as below.
(1) An information processing device comprising:
   a first reception unit that receives first data generated by a first sensor in synchronization with a first reference signal and second data generated by a second sensor; and
   a transmission unit that transmits the first data and at least part of the second data as third data synchronized with a second reference signal.
(2) The information processing device according to (1), wherein
   the second sensor is an event-based vision sensor (EVS) including one or more pixels that detect a change in luminance of incident light as an event.
(3) The information processing device according to (2), wherein
   the EVS generates the second data without being synchronized with the first reference signal.
(4) The information processing device according to (2) or (3), wherein
   the second data includes second information indicating whether the event is an event detected during an exposure period of the first sensor.
(5) The information processing device according to (4), wherein
   the transmission unit transmits, as the third data, fourth data selected from the second data based on the second information and the first data.
(6) The information processing device according to (5), wherein
   the fourth data is data generated based on an event detected during the exposure period.
(7) The information processing device according to (5), wherein
   the fourth data is data generated based on an event detected outside the exposure period.
(8) The information processing device according to any one of (4) to (7), further comprising:
   a control section that receives a request for either data generated based on an event detected during the exposure period or data generated based on an event detected outside the exposure period, wherein
   the transmission unit transmits the third data including data requested in the request among the second data.
(9) The information processing device according to (4), wherein
   the transmission unit differentiates data generated based on an event detected during the exposure period and data generated based on an event detected outside the exposure period in the second data based on the second information, and transmits the third data including the differentiated two pieces of data.
(10) The information processing device according to any one of (1) to (9), wherein
   the first sensor is an image sensor including one or more pixels that generate a gradation signal according to a light amount of incident light.
(11) The information processing device according to any one of (1) to (9), wherein
   the first sensor is a distance measuring sensor including one or more pixels that generate, based on a flight time of light reflected by a subject, first information about a distance to the subject.
(12) The information processing device according to any one of (1) to (11), further comprising:
   a processing unit that generates the third data by framing the first data and at least part of the second data.
(13) The information processing device according to any one of (1) to (12), comprising:
   a second reception unit that receives the third data transmitted from the transmission unit; and
   a signal processing unit that executes predetermined processing on the third data received by the second reception unit.
(14) The information processing device according to (13), wherein
   the first data is image data, and
   the predetermined processing is a deblur correction for correcting a blur occurring in the first data.
(15) The information processing device according to (13), wherein
   the first data is image data or depth information, and
   the predetermined processing is frame interpolation for interpolating a frame between the first data generated in synchronization with the first reference signal.
(16) The information processing device according to any one of (1) to (15), further comprising:
   at least one of the first sensor and the second sensor.
(17) An information processing method comprising:
   a step of receiving first data generated by a first sensor in synchronization with a first reference signal and second data generated by a second sensor; and
   a step of transmitting the first data and at least part of the second data as third data synchronized with a second reference signal.
(18) An information processing device comprising:
   a processing unit that generates third data including first data generated by a first sensor in synchronization with a first reference signal and at least part of second data generated by a second sensor; and
   a transmission unit that transmits at least one of the third data or a processing result generated by executing at least part of predetermined processing on the third data.
(19) An information processing device comprising:
   a calling unit that acquires third data including first data generated by the first sensor in synchronization with the first reference signal and at least part of second data generated by the second sensor; and
   a signal processing unit that executes at least part of predetermined processing on the third data acquired by the calling unit.

### Reference Signs List

1, 1A to 1D, 2, 3 IMAGING DEVICE
10, 100 SOLID-STATE IMAGING DEVICE
11 FIRST SENSOR (IMAGE SENSOR, TOF SENSOR)
11A, 1022 HYBRID SENSOR
12 SECOND SENSOR (EVS)
13, 1050 FIRST SIGNAL PROCESSING DEVICE (FPGA)
14, 1100 SECOND SIGNAL PROCESSING DEVICE (APPLICATION PROCESSOR)
15 CONTROL SECTION
16 LIGHT PROJECTION UNIT
17 LIGHT EMITTING UNIT
18, 1010 LIGHT SOURCE
19 EXTERNAL I/F
140 PIXEL CHIP
150 CIRCUIT CHIP
401, 501 RECEPTION UNIT
402 SYNCHRONIZATION PROCESSING UNIT
403 TRANSMISSION UNIT
404, 507 COMMUNICATION CONTROL SECTION
411, 415, 502, 506 API PROCESSING UNIT
412, 414, 503, 505 API CALLING UNIT
413, 504 SIGNAL PROCESSING UNIT
1011 LIGHT SOURCE DRIVE UNIT
1012 VCSEL
1030 IRRADIATION LENS
1040 IMAGING LENS

## Claims

1. An information processing device comprising:
a first reception unit that receives first data generated by a first sensor in synchronization with a first reference signal and second data generated by a second sensor; and
a transmission unit that transmits the first data and at least part of the second data as third data synchronized with a second reference signal.

2. The information processing device according to claim 1, wherein
the second sensor is an event-based vision sensor (EVS) including one or more pixels that detect a change in luminance of incident light as an event.

3. The information processing device according to claim 2, wherein
the EVS generates the second data without being synchronized with the first reference signal.

4. The information processing device according to claim 2, wherein
the second data includes second information indicating whether the event is an event detected during an exposure period of the first sensor.

5. The information processing device according to claim 4, wherein
the transmission unit transmits, as the third data, fourth data selected from the second data based on the second information and the first data.

6. The information processing device according to claim 5, wherein
the fourth data is data generated based on an event detected during the exposure period.

7. The information processing device according to claim 5, wherein
the fourth data is data generated based on an event detected outside the exposure period.

8. The information processing device according to claim 4, further comprising:
a control section that receives a request for either data generated based on an event detected during the exposure period or data generated based on an event detected outside the exposure period, wherein
the transmission unit transmits the third data including data requested in the request among the second data.

9. The information processing device according to claim 4, wherein
the transmission unit differentiates data generated based on an event detected during the exposure period and data generated based on an event detected outside the exposure period in the second data based on the second information, and transmits the third data including the differentiated two pieces of data.

10. The information processing device according to claim 1, wherein
the first sensor is an image sensor including one or more pixels that generate a gradation signal according to a light amount of incident light.

11. The information processing device according to claim 1, wherein
the first sensor is a distance measuring sensor including one or more pixels that generate, based on a flight time of light reflected by a subject, first information about a distance to the subject.

12. The information processing device according to claim 1, further comprising:
a processing unit that generates the third data by framing the first data and at least part of the second data.

13. The information processing device according to claim 1, comprising:
a second reception unit that receives the third data transmitted from the transmission unit; and
a signal processing unit that executes predetermined processing on the third data received by the second reception unit.

14. The information processing device according to claim 13, wherein
the first data is image data, and
the predetermined processing is a deblur correction for correcting a blur occurring in the first data.

15. The information processing device according to claim 13, wherein
the first data is image data or depth information, and
the predetermined processing is frame interpolation for interpolating a frame between the first data generated in synchronization with the first reference signal.

16. The information processing device according to claim 1, further comprising:
at least one of the first sensor and the second sensor.

17. An information processing method comprising:
a step of receiving first data generated by a first sensor in synchronization with a first reference signal and second data generated by a second sensor; and
a step of transmitting the first data and at least part of the second data as third data synchronized with a second reference signal.

18. An information processing device comprising:
a processing unit that generates third data including first data generated by a first sensor in synchronization with a first reference signal and at least part of second data generated by a second sensor; and
a transmission unit that transmits at least one of the third data or a processing result generated by executing at least part of predetermined processing on the third data.

19. An information processing device comprising:
a calling unit that acquires third data including first data generated by the first sensor in synchronization with the first reference signal and at least part of second data generated by the second sensor; and
a signal processing unit that executes at least part of predetermined processing on the third data acquired by the calling unit.
